# EUROPÄISCHE PATENTSCHRIFT

(11) **EP 2 108 555 B1**
(45) Veröffentlichungstag und Bekanntmachung des Hinweises auf die Patenterteilung: **02.10.2019**
(21) Anmeldenummer: 08022083.3
(22) Anmeldetag: 19.12.2008
(51) Int. Cl.: B60T 13/26, B60T 13/66, B60T 13/68, B60T 8/00, B60T 8/32

(54) **Bremsanlage für einen Fahrzeugzug**
Braking assembly for a vehicle train
Installation de freinage pour une traction de véhicule

(30) Priorität: 14.03.2008 DE 102008014459
(43) Veröffentlichungstag der Anmeldung: 14.10.2009
(73) Patentinhaber: WABCO GmbH, 30453 Hannover (DE)
(72) Erfinder: Bensch, Uwe, 30161 Hannover (DE); Förster, Henning, 31171 Nordstemmen (DE); Strache, Wolfgang, 30966 hemmingen (DE); Struwe, Otmar, 30163 Hannover (DE)

(56) Entgegenhaltungen:
- EP-A2- 1 719 677
- WO-A1-97/03871
- WO-A1-03/004333
- DE-A1- 3 407 660
- DE-A1-102006 036 748
- US-A- 3 951 464
- US-A- 6 039 410
- US-A1- 2005 127 747
- US-A1- 2006 214 506

## Beschreibung

Die Erfindung betrifft eine elektrisch gesteuerte Bremsanlage für einen Fahrzeugzug, der ein Zugfahrzeug und wenigstens ein Anhängefahrzeug umfasst. Die Bremsanlage weist eine Bremspedaleinrichtung auf, mittels der ein Bremsanforderungssignal erzeugbar ist. In Erwiderung auf dieses Bremsanforderungssignal ist wenigstens eine erste Bremse an dem Zugfahrzeug zum Einbremsen dieses Zugfahrzeugs und wenigstens eine zweite Bremse an dem Anhängefahrzeug zum Einbremsen dieses Anhängefahrzeugs betätigbar. Ferner weist die Bremsanlage eine auf die zweite Bremse des Anhängefahrzeugs wirkende Streckbremsfunktion auf.

Die Streckbremsfunktion wird dazu verwendet, den Fahrzeugzug während eines Bremsvorgangs bei niedrigen Fahrbahnreibwerten, insbesondere bei Glätte, oder auf Gefällstrecken gestreckt zu halten. Auch zum Testen einer Bremswirkung des Anhängefahrzeugs kann die Streckbremsfunktion der Bremsanlage vorteilhaft eingesetzt werden. Darüber hinaus kann mittels der Streckbremsfunktion eine Verbindung des Zugfahrzeugs zum Anhängefahrzeug geprüft werden.

Bei den bekannten Bremsanlagen mit Streckbremsfunktion ist ein Handhebel zur Betätigung eines pneumatischen Druckregelventils in der Fahrerkabine vorgesehen, mittels dessen allein die Betriebsbremse des Anhängefahrzeugs betätigt werden kann, während das Zugfahrzeug bei Betätigung dieses Druckregelventils nicht eingebremst wird.

Dieses Druckregelventil ist über Druckluftleitungen, in der Regel über ein Anhängersteuerventil, mit der zweiten Bremse an dem Anhängefahrzeug verbunden. Hierzu sind bei derartigen bekannten Bremsanlagen Druckluftleitungen in die Fahrerkabine, welche sowohl die Bremspedaleinrichtung als auch das Druckregelventil aufweist, geführt. Eine Installation von Druckluftleitungen ist teuer.

Ein weiterer Nachteil dieser bekannten Bremsanlagen mit Streckbremsfunktion besteht in der Handbetätigung der Streckbremse mittels des Handhebels. Hierzu muss ein Fahrer nämlich mit einer Hand diesen Handhebel betätigen. Es verbleibt somit nur noch eine weitere Hand, mittels der dieser Fahrer das Lenkrad zum Lenken des Zugfahrzeugs drehen kann. Insbesondere auf kurvigen Gefällstrecken muss der Fahrer wiederholt den Handhebel zum Steuern der Streckbremse betätigen und gleichzeitig am Lenkrad drehen. Dies ist nachteilig und kann sogar gefährlich sein.

Ferner ist der konventionelle Einsatz der Streckbremse in westeuropäischen Ländern gesetzlich nicht erlaubt. Die Aktivierung der Betriebsbremsen des Anhängefahrzeug ohne Bremsung des Zugfahrzeuges (Streckbremswirkung) darf hier nur automatisch zu Zwecken der Fahrzeugstabilisierung durchgeführt werden.

Der Erfindung liegt daher das Problem zugrunde, derartige bekannte Bremsanlagen zu verbessern.

Die Erfindung löst dieses Problem mit einer Bremsanlage der eingangs genannten Art, welche ein elektrisches Bedienelement aufweist, mittels dessen mittelbar oder unmittelbar ein Streckbremssteuersignal für eine derartige Steuerung der Streckbremsfunktion erzeugbar ist, dass in Erwiderung auf dieses Streckbremssteuersignal bei Betätigung der Bremspedaleinrichtung das Einbremsen des Zugfahrzeugs mittels der ersten Bremse ganz oder teilweise unterdrückbar ist.

Die Erfindung stellt somit eine Streckbremse für einen Fahrzeugzug bereit, welche mittels der vorhandenen Bremspedaleinrichtung betätigt und fein dosiert werden kann. Es muss lediglich ein elektrisches Bedienelement betätigt werden, welches das elektrische Streckbremssteuersignal zur Aktivierung eines Streckbremsmodus der Bremspedaleinrichtung erzeugt. Wenn dieses Streckbremssteuersignal vorliegt, ist bei einer Betätigung eines Bremspedals der Bremspedaleinrichtung lediglich die zweite Bremse an dem Anhängefahrzeug betätigbar, während die erste Bremse an dem Zugfahrzeug nicht betätigt wird. Die erste Bremse wird in Erwiderung auf das Streckbremssteuersignal somit ganz unterdrückt.

Die Schriften US 2006/0214506 A1, EP 1 719 677 A2, US 6,039,410 und US 3,951,464 offenbaren Bremssysteme für Fahrzeuge.

Alternativ kann das Einbremsen des Zugfahrzeugs mittels der ersten Bremse auch nur teilweise unterdrückt werden. Ein teilweise unterdrücktes Einbremsen bedeutet, dass die erste Bremse nicht ganz außer Betrieb gesetzt ist, sondern mit einer verminderten Bremskraft verglichen mit einer Betätigung des Bremspedals ohne dieses Streckbremssteuersignal betätigt wird. Zudem kann das Zugfahrzeug noch wenigstens eine dritte Bremse aufweisen, die in Erwiderung auf das Bremsanforderungssignal bei aktivierter Streckbremsfunktion betätigbar ist.

Der Fahrer muss das Bedienelement lediglich betätigen, um die Streckbremse mittels des Bremspedals betätigbar zu machen. Das Bedienelement umfasst somit einen Umschalter zwischen einer bekannten Betriebsbremsfunktion der Bremsanlage, bei der die erste Bremse des Zugfahrzeugs und die zweite Bremse des Anhängefahrzeugs in Erwiderung auf das Bremsanforderungssignal betätigt werden, und einer Streckbremsfunktion, bei der die erste Bremse des Zugfahrzeugs verglichen mit dieser Betätigung über die bekannte Betriebsbremsfunktion ganz oder teilweise unterdrückt wird. Das elektrische Bedienelement aktiviert oder deaktiviert somit die Streckbremsfunktion für den Fahrzeugzug und schaltet zwischen Streckbremsfunktion und Betriebsbremsfunktion um.

Sobald die Streckbremsfunktion aktiviert ist, braucht ein Fahrer lediglich das Bremspedal der Bremspedaleinrichtung zu betätigen, um den Fahrzeugzug mittels der Betriebsbremse des Anhängefahrzeugs und ggf. mittels der teilweise unterdrückten Betriebsbremse des Zugfahrzeugs einzubremsen. Die Streckbremse lässt sich hierbei mittels der Betätigung des Bremspedals leicht und feinstufig dosieren. Auf Gefällstrecken kann der Fahrer den Fahrzeugzug einbremsen und gleichzeitig mit zwei Händen eine Lenkbewegung durchführen. Somit kann der Fahrzeugzug sicher in eine Kurve geführt werden. Während das Zugfahrzeug sich am Kurveneingang relativ zu dem Anhängefahrzeug der Kurve folgend verschwenkt, vermeidet nämlich die Streckbremse dass das Anhängefahrzeug dieses Zugfahrzeug aus der Kurve schiebt.

Vorteilhaft an der erfindungsgemäßen Bremsanlage ist zudem, dass keine Druckluftleitungen für eine Bereitstellung der Streckbremsfunktion in der Fahrerkabine verlegt werden müssen. Das Bremsanforderungssignal ist nämlich ein elektrisches Signal, welches einer Einrichtung zur Bemessung einer ersten Bremskraft und zur Bemessung einer zweiten Bremskraft zur Betätigung der ersten bzw. zweiten Bremse bereitgestellt wird. Somit muss lediglich ein Kabel von dem Bedienelement zu dieser Einrichtung geführt werden.

Das Bedienelement ist klein im Vergleich zu dem beim Stand der Technik verwendeten pneumatischen Druckregelventil und nimmt deshalb nur wenig Platz in der Fahrerkabine ein. Die Streckbremse ist stufbar mittels des ohnehin vorhandenen Bremspedals betätigbar. Die Erfindung spart somit kostbaren Platz in der Fahrerkabine.

Das Bedienelement kann überdies ggf. deaktiviert werden, wenn keine Streckbremsfunktion benötigt wird oder diese in einem Land der Verwendung sogar verboten ist. Hierdurch ist es möglich, kostengünstig große Stückzahlen der Bremsanlage herzustellen und in Fahrzeuge einzubauen, wobei sich die Bremsanlage mit der Streckbremsfunktion lediglich durch das Bedienelement von dieser Bremsanlage ohne diese Streckbremsfunktion unterscheidet.

Die Erfindung erhöht die Sicherheit und den Komfort bei der Verwendung einer Streckbremsfunktion und senkt im Vergleich zu den bekannten Bremsanlagen mit einer Streckbremsfunktion die Kosten.

Bevorzugt weist die Bremsanlage eine Steuereinrichtung zur Steuerung eines elektronisch gesteuerten Bremssystems auf. Von dieser Steuereinrichtung sind sowohl das Bremsanforderungssignal als auch das Streckbremssteuersignal empfangbar. Im Falle eines Empfanges des Bremsanforderungssignals und Ausbleibens des Streckbremssteuersignals, d.h. bei regulär betätigter Betriebsbremse, ist die erste Bremse an dem Zugfahrzeug mit einer ersten Bremskraft und die zweite Bremse an dem Anhängefahrzeug mit einer zweiten Bremskraft betätigbar. Beide Bremsen werden hierbei nach Maßgabe des Bremsanforderungssignals betätigt, d.h. ein stärker und/oder schneller betätigtes Bremspedal hat normalerweise einen Bremsvorgang mit einer vergleichsweise höheren Bremskraft zur Folge. Neben dem Bremsanforderungssignal kann es weitere Parameter geben, welche eine Bremskraft erhöhen oder auch erniedrigen können. Bspw. kann das elektronisch gesteuerte Bremssystem eine Verzögerungsregelung aufweisen und in Erwiderung auf einen Vergleich einer Soll-Verzögerung mit einer Ist-Verzögerung die Bremskraft erhöhen oder erniedrigen. Bspw. können auch Daten eines Lastsensors oder berechnete Lasten in der Steuereinrichtung verarbeitet werden und die Bremskraft in Abhängigkeit von einer ermittelten Last variieren.

Im Falle des Empfangens dieses Bremsanforderungssignals und des gleichzeitigen oder vorhergehenden Empfangens dieses Streckbremssteuersignals ist die erste Bremse nicht oder mit einer verglichen mit der ersten Bremskraft verringerten Bremskraft betätigbar, während die zweite Bremse mit der zweiten Bremskraft oder mit einer verglichen mit der zweiten Bremskraft erhöhten Bremskraft betätigbar ist. Die Streckbremsfunktion ist somit aktiviert, wenn gleichzeitig zu dem Empfangen des Bremsanforderungssignals das Streckbremssteuersignal vorliegt oder wenn dieses Streckbremssteuersignal vorher erzeugt wurde. Das Streckbremssteuersignal kann somit entweder dauerhaft übermittelt werden oder alternativ auch für eine unbegrenzte oder begrenzte Zeitdauer eingeschaltet und auch wieder ausgeschaltet werden.

In dem Fall, dass die Streckbremsfunktion aktiviert ist, wenn gleichzeitig das Streckbremssteuersignal vorliegt, muss dieses Streckbremssteuersignal durch eine andauernde Betätigung des Bedienelementes andauernd erzeugt werden. Die Streckbremsfunktion ist somit so lange aktiviert, wie dieses Bedienelement betätigt wird, d.h. solange, wie bspw. ein am Lenkrad befindlicher Taster gedrückt ist. Ggf. wird jedoch die Streckbremsfunktion erst mit einem Nachlauf nach Beendigung der Erzeugung des Streckbremssteuersignals deaktiviert. Eine Nachlaufzeit kann hierbei bspw. 50 Millisekunden betragen. Somit führt ein versehentliches kurzzeitiges Nicht-Betätigen des Bedienelements, bspw. aufgrund von Erschütterungen, nicht sofort zu einer Deaktivierung der Streckbremsfunktion.

Alternativ ist die Bremsanlage derart ausgebildet, dass das Bedienelement nicht dauerhaft zur Aktivierung der Streckbremsfunktion betätigt werden muss. Die Streckbremsfunktion wird mittels des Bedienelements eingeschaltet. Das Ausschalten kann manuell oder automatisch nach einer vorbestimmten oder einstellbaren Zeitdauer geschehen. Das Ausschalten kann darüber hinaus auch mit weiteren Betätigungseinrichtungen der Bremsanlage gekoppelt sein. Bspw. kann die aktivierte Streckbremsfunktion so lange aktiviert bleiben, wie das Bremspedal der Bremspedaleinrichtung betätigt wird. Sobald das Bremspedal nicht mehr betätigt wird, d.h. kein Bremsanforderungssignal mehr erzeugt wird, kann in Erwiderung auf dieses Ausbleiben des Bremsanforderungssignals auch die Streckbremsfunktion deaktiviert werden.

Die aktivierte Streckbremsfunktion verringert primär die Bremskraft, mit der die erste Bremse betätigbar ist oder verhindert ganz ein Betätigen der ersten Bremse. Die Bremskraft der zweiten Bremse kann sich indirekt erhöhen, bspw. indem eine Verzögerungsregelung der Bremsanlage hierdurch einer verringerten Bremskraft des Fahrzeugzugs entgegenwirkt. Alternativ kann die Steuereinrichtung auch derart ausgebildet sein, dass sie die zweite Bremskraft bereits in Erwiderung auf das Streckbremssteuersignal von sich aus erhöht.

In einer besonders bevorzugten Ausführungsform ist die Steuereinrichtung zur Steuerung des Elektronischen Bremssystems als eigenständiges elektronisches Steuergerät ausgebildet. Für diese Steuerung weist dieses Steuergerät eine eigenständige Elektronik auf, welche eine zu ggf. vorhandenen weiteren Elektroniken der Bremsanlage zusätzliche Elektronik ist. Insbesondere ist die Steuereinrichtung in ein eigenes Gehäuse integriert, welches über elektrische Leitungen mit weiteren Komponenten der Bremsanlage elektrisch verbunden ist und an einer beliebigen Stelle am Fahrzeug, insbesondere in einer Fahrerkabine oder an einem Fahrzeugrahmen, angeordnet sein kann, welche mittels dieser elektrischen Leitungen erreichbar ist.

Diese Steuereinrichtung ist in einer besonderen alternativen Ausführungsform in die Bremspedaleinrichtung integriert. Das elektrische Bedienelement und eine ggf. vorhandene Einstellvorrichtung zum Einstellen eines Unterdrückungsgrades sind über wenigstens eine elektrische Leitung mit der Bremspedaleinrichtung verbunden. Über diese elektrische Leitung werden das Streckbremssteuersignal und ggf. ein einen Unterdrückungsgrad repräsentierendes Signal an die Steuereinrichtung übermittelt. Die Integration der Steuereinrichtung in die Bremspedaleinrichtung ist vorteilhaft, da die zusammengefasste Bauweise Kosten spart.

Alternativ kann die Steuereinrichtung in einer weiteren besonderen Ausführungsform in ein Achsmodul integriert sein. Auch hier spart die Integration in ein bestehendes Modul Kosten. Wenigstens eine elektrische Leitung verbindet in diesem Fall die Bremspedaleinrichtung, das elektrische Bedienelement und ggf. die Einstellvorrichtung zum Einstellen eines Unterdrückungsgrades mit dem Achsmodul. Mittels dieses Achsmoduls ist die erste Bremse und/oder die zweite Bremse betätigbar. Im Falle einer elektropneumatischen Bremsanlage weist das Achsmodul zum Betätigen der Bremse wenigstens ein Ventil auf. Mittels dieses Ventils ist ein pneumatischer Druck aussteuerbar, der über wenigstens eine Druckluftleitung wenigstens einen Bremszylinder der ersten Bremse bzw. zweiten Bremse zugeleitet wird.

Vorzugsweise ist das elektrische Bedienelement schaltbar und weist wenigstens zwei Schaltzustände auf. In einem ersten Schaltzustand ist die Streckbremsfunktion ausgeschaltet, d.h. das Einbremsen des Zugfahrzeugs wird nicht unterdrückt. In einem zweiten Schaltzustand ist die Streckbremsfunktion eingeschaltet. Bei eingeschalteter Streckbremsfunktion ist das Einbremsen des Zugfahrzeugs ganz oder teilweise unterdrückbar. Mittels des Bedienelements kann somit leicht die Streckbremsfunktion eingeschaltet und/oder ausgeschaltet werden.

In einer Weiterbildung weist das elektrische Bedienelement wenigstens eine Lampe auf. Diese Lampe ist in Anhängigkeit des jeweiligen Schaltzustandes leuchtend oder nicht-leuchtend schaltbar. Es kann somit angezeigt werden, ob die Streckbremsfunktion aktiviert oder deaktiviert ist. Bspw. kann bei aktivierter Streckbremsfunktion die Lampe dauerhaft leuchten oder blinken. Diese Lampe kann bei deaktivierter Streckbremsfunktion nicht-leuchtend geschaltet sein, während ggf. eine weitere Lampe leuchtend geschaltet ist, um die deaktivierte Streckbremsfunktion anzuzeigen.

Das Bedienelement ist bevorzugt manuell, d.h. mit einer Hand oder mittels eines Fußes betätigbar. Das manuell betätigbare Bedienelement ist bevorzugt zusammen mit anderen Bedienelementen in einem Armaturenbrett im Fahrerhaus des Zugfahrzeugs oder direkt auf dem Lenkrad angeordnet. Das manuell betätigbare Bedienelement ist ein Handschalter, Hebel, Druckknopf oder Taster, welcher ggf. eine Wippe aufweist, oder ein beliebiges anderes manuell betätigbares Bedienelement, welches bevorzugt in wenigstens zwei Schaltzuständen schaltbar ist.

Das mittels eines Fußes betätigbare Bedienelement befindet sich im Fußraum, d.h. in einem Bereich, den ein auf einem Fahrersitz sitzender Fahrer mit seinem Fuß erreichen kann. Das mittels eines Fußes betätigbare Bedienelement ist ein Fußschalter, Fußdruckknopf, eine Fußwippe, ein Fußtaster oder ein Bedienelement anderer Bauart, welches mittels eines Fußes betätigbar und bevorzugt in wenigstens zwei Schaltzuständen schaltbar ist.

Das Bedienelement kann eine, zwei oder auch mehr als zwei Einheiten umfassen. Bspw. kann die Streckbremsfunktion mittels eines manuell betätigbaren Tasters aktivierbar und mittels eines per Fuß betätigbaren Fußschalters wieder deaktivierbar ausgeführt sein. Auch eine redundante Ausführung ist möglich, wobei eine von wenigstens zwei Einheiten, bspw. ein Handschalter und ein Fußtaster oder zwei am Lenkrad befindliche Taster, alternativ zum Aktivieren bzw. Deaktivieren der Streckbremsfunktion betätigt werden kann oder andauernd gedrückt gehalten werden muss, solange die Streckbremsfunktion eingeschaltet bleiben soll.

Alternativ kann das Bedienelement auch derart ausgeführt sein, dass wenigstens zwei Einheiten, bspw. ein Taster am Armaturenbrett und ein Fußtaster neben der Bremspedaleinrichtung, gleichzeitig betätigt werden müssen, um die Streckbremsfunktion zu aktivieren und/oder zu deaktivieren. Dies erhöht die Sicherheit, indem ein unbeabsichtigtes Aktivieren bzw. Deaktivieren der Streckbremsfunktion vermieden wird.

In einer Weiterbildung ist ein Unterdrückungsgrad stufenlos oder mehrstufig einstellbar, mit dem das Einbremsen des Zugfahrzeugs unterdrückbar ist. In einer ersten Einstellung ist das Zugfahrzeug hierbei weniger als bei gleichem Bremsanforderungssignal in einer zweiten Einstellung unterdrückbar. Die Streckbremsfunktion kann somit bspw. an unterschiedliche Straßenverhältnisse oder ein Gefälle der Straße angepasst werden. Die erste Einstellung wird somit bspw. bei einer Straße mit einem ersten Gefälle gewählt, während die zweite Einstellung bei einer Straße mit einem zweiten Gefälle, welches steiler ist als das erste Gefälle, gewählt wird. Der Fahrzeugzug wird dann bei dem steileren zweiten Gefälle bei Betätigung eines gleichen Bremsanforderungssignals stärker gestreckt als bei dem ersten Gefälle bzw. der ersten Einstellung.

Zum Einstellen des Unterdrückungsgrades ist bevorzugt ein diesen Unterdrückungsgrad repräsentierendes Signal erzeugbar. Dieses Signal wird zusammen mit dem Streckbremssteuersignal bereitgestellt. Insbesondere wird dieses den Unterdrückungsgrad repräsentierende Signal zusammen mit dem Streckbremssteuersignal und dem Bremsanforderungssignal der Steuereinrichtung zur Steuerung des elektronisch gesteuerten Bremssystems bereitgestellt. Alternativ wird dieses den Unterdrückungsgrad repräsentierende Signal in dem Streckbremssteuersignal, d.h. über ein und dieselbe elektrische Leitung, bereitgestellt. Alle diese Signale, d.h. das den Unterdrückungsgrad repräsentierende Signal, das Streckbremssteuersignal und auch das Bremsanforderungssignal sind elektrische Signale, welche entweder analog oder digital über elektrische Leitungen übertragbar sind, oder optische Signale, welche bspw. über Glasfaserleitungen übertragbar sind.

Der Unterdrückungsgrad ist bevorzugt mittels einer Einstellvorrichtung manuell einstellbar beispielsweise mit Raststellungen. Diese Einstellvorrichtung ist insbesondere ein Drehschalter oder ein Hebel, kann aber auch eine andere Betätigungsvorrichtung sein, welche zur Variation eines elektrischen Signals geeignet ist. Mittels der Einstellvorrichtung wird ggf. das den Unterdrückungsgrad repräsentierende Signal verändert, um hierdurch den Unterdrückungsgrad manuell einzustellen. Ein Fahrer kann somit bequem durch Drehung an einem Drehschalter oder Bewegung eines Hebels die Streckbremsfunktion an unterschiedliche Erfordernisse anpassen.

In einer bevorzugten Weiterbildung bildet die Einstellvorrichtung zusammen mit dem Bedienelement eine Einheit. Diese Einheit kann somit ein Drehschalter oder Hebel mit einem Taster oder einem Druckknopf sein. Auch der Drehschalter oder Hebel selbst kann als Druckknopf oder Taster ausgebildet sein. Durch Drehung des Drehschalters oder Betätigung des Hebels kann somit der Unterdrückungsgrad eingestellt werden, während durch Betätigung des Tasters oder Druckknopfes bzw. durch Drücken oder Ziehen des Drehschalters oder Hebels selbst die Streckbremsfunktion aktiviert oder deaktiviert werden kann. Die Streckbremsfunktion kann hiermit schnell aktiviert und in ihrem Unterdrückungsgrad eingestellt werden, ohne dass hierzu eine Hand lange Wege zwischen dem Bedienelement und der Einstellvorrichtung zurücklegen müsste.

In einer Weiterbildung ist der Unterdrückungsgrad alternativ oder zusätzlich zu der manuellen Einstellbarkeit automatisch einstellbar. Das automatische Einstellen kann hierbei in Abhängigkeit von dem Bremsanforderungssignal, von einem Lenkradeinschlag, von einem Fahrzeugzustand und/oder von einem Fahrzustand erfolgen. Bspw. kann bei einem Bremsanforderungssignal, welches als Vollbremsung festgestellt wird, der Unterdrückungsgrad, ggf. bis auf Null, verringert werden. Alternativ oder zusätzlich kann der Unterdrückungsgrad bei einer Kurvenfahrt, welche mittels eines Lenkradeinschlages festgestellt wird, erhöht werden. Bei enger Kurvenfahrt ist es bspw. nämlich nicht ratsam, selbst bei einer Vollbremsung den Unterdrückungsgrad zu verringern oder die Streckbremsfunktion vielleicht sogar ganz auszuschalten.

Auch der Fahrzeugzustand und/oder der Fahrzustand kann in die automatische Steuerung des Unterdrückungsgrades einfließen. Für ein schwer beladenes Anhängefahrzeug ist bspw. ein höherer Unterdrückungsgrad einzustellen, als für ein vergleichsweise nur leicht beladenes Anhängefahrzeug. Auch die Geschwindigkeit, Beschleunigung bzw. Verzögerung und/oder ggf. eine Querbeschleunigung des Fahrzeugs und/oder eine sensierte Steigung bzw. ein sensiertes Gefälle der Straße können den Fahrzeugzustand bzw. Fahrzustand repräsentieren, welcher in die Einstellung des Unterdrückungsgrades einfließt.

Für die automatische Einstellbarkeit des Unterdrückungsgrades wird eine Recheneinrichtung verwendet. Bevorzugt wird hierzu eine Recheneinrichtung verwendet, welche ohnehin in der Steuereinrichtung zur Steuerung des elektrischen Bremssystems vorhanden ist. Alternativ wird eine weitere Recheneinrichtung verwendet, welche aber ebenfalls in der Steuereinrichtung angeordnet sein kann.

Im Falle einer elektropneumatisch betätigbaren ersten Bremse wird in Erwiderung auf eine Betätigung der Bremspedaleinrichtung ein Steuerdruck in einer Druckluftleitung ausgesteuert. Vorzugsweise weist die Bremsanlage ein Absperrmagnetventil in dieser Druckluftleitung auf, mittels welchem diese Druckluftleitung absperrbar ist. Bei abgesperrter Druckluftleitung werden Membranteile von Bremszylindern der ersten Bremse nicht mit dem mittels der Bremspedaleinrichtung ausgesteuerten Steuerdruck belüftet, wodurch ein Einbremsen des Zugfahrzeugs mittels dieser ersten Bremse unterdrückt wird.

In einer Weiterbildung wirkt die Streckbremsfunktion der Bremsanlage nicht nur auf die zweite Bremse des Anhängefahrzeugs, sondern auch auf wenigstens eine dritte Bremse, welche sich an einer Vorderachse des Zugfahrzeugs befindet. Die erste Bremse an dem Zugfahrzeug ist eine Hinterachse dieses Zugfahrzeugs. Somit werden in Erwiderung auf das Bremsanforderungssignal die zweite Bremse an dem Anhängefahrzeug und die dritte Bremse an dem Zugfahrzeug betätigt, während ein Einbremsen des Zugfahrzeugs mittels der ersten Bremse an der Hinterachse ganz oder teilweise unterdrückt wird. Hierdurch wird einem Ausbrechen des Hecks dieses Zugfahrzeugs während eines Bremsvorgangs, insbesondere in einer Kurve, entgegengewirkt. Die nicht oder nur teilweise eingebremsten Räder an der Hinterachse weisen nämlich vergleichsweise hohe Seitenführungskräfte auf. An den Rädern der Vorderachse sind derart große Seitenführungskräfte während eines Bremsvorgangs nicht notwendig. Es ist deshalb vorteilhaft, auch während eines Bremsvorgangs mit Streckbremsfunktion Bremsen an Rädern der Vorderachse zu betätigen, um damit einen Bremsweg zu verkürzen, ohne dass sich hierbei die Stabilität des Zugfahrzeugs während des Bremsvorgangs nennenswert verringern würde.

Die Bremsanlage kann derart weitergebildet sein, dass sie einen größtmöglichen Verzögerungswunsch, d.h. eine Vollbremsung, erkennt. Ein größtmöglicher Verzögerungswunsch wird hierbei von der Bremsanlage in Erwiderung auf ein vollständiges und/oder sehr schnelles Betätigen eines Bremspedals der Bremspedaleinrichtung ermittelt, also dann, wenn dieses Bremspedal bis zu einem Anschlag durchgetreten wird oder wenn eine in Erwiderung auf eine Betätigung des Bremspedals ermittelte Soll-Verzögerung sich sehr schnell erhöht. Bei einem ermittelten größtmöglichen Verzögerungswunsch bei aktivierter Streckbremsfunktion deaktiviert die Bremsanlage diese Streckbremsfunktion. Somit kann in gefährlichen Situationen, welche eine Vollbremsung erfordern, der Fahrzeugzug mit allen Bremsen, d.h. ohne Unterdrückung von Bremsen, eingebremst werden.

Bevorzugt ist die Bremsanlage derart ausgebildet, dass bei einer Aktivierung der Streckbremsfunktion während einer Betätigung der Bremspedaleinrichtung, d.h. während eines Bremsvorgangs, das Einbremsen des Zugfahrzeugs mittels der ersten Bremse stufenlos oder mehrstufig stärker unterdrückbar ist, d.h. ein Unterdrückungsgrad sich stufenlos oder mehrstufig erhöht. Das Aktivieren der Streckbremsfunktion führt somit nicht zu einem plötzlichen Ausfall der ersten Bremse und verringerten Verzögerung des Zugfahrzeugs und des Fahrzeugzugs. Stattdessen wird eine Bremskraft, mittels welcher die erste Bremse betätigt wird, stufenlos oder mehrstufig in einem Zeitintervall von bspw. wenigen Sekunden oder auch von weniger als einer Sekunde reduziert, bis ein eingestellter Unterdrückungsgrad erreicht ist, d.h. bis die erste Bremse nicht oder nur noch zu einem eingestellten Teil betätigt ist.

Bevorzugt ist auch ein Zeitintervall vorgesehen, innerhalb dessen bei einer Deaktivierung der aktivierten Streckbremsfunktion ein Unterdrückungsgrad während des Bremsvorgangs stufenlos oder schrittweise verringerbar ist. Somit findet ein weicher Übergang von der aktivierten zu der deaktivierten Streckbremsfunktion statt. Einer plötzlich stark erhöhten Verzögerung in Folge einer Deaktivierung der Streckbremsfunktion, welche u.U. gefährlich sein kann, wird somit entgegengewirkt. Die Bremskraft der ersten Bremse wird nämlich erhöht, bis diese nicht mehr unterdrückt wird.

In einer Weiterentwicklung wird die Geschwindigkeit dieses Erhöhens bzw. Verringerns des Unterdrückungsgrades bei der Aktivierung bzw. Deaktivierung der Streckbremsfunktion während eines Bremsvorgangs automatisch von Fahrzuständen, insbesondere einer Fahrgeschwindigkeit, des Fahrzeugs und/oder einer Betätigungsgeschwindigkeit und/oder eine Betätigungskraft bei der Betätigung eines Bremspedals der Bremspedaleinrichtung beeinflusst. Bspw. verringert eine schnelle Betätigung des Bremspedals die Zeit, in welcher der Unterdrückungsgrad des Einbremsens des Zugfahrzeugs mittels der ersten Bremse verringert wird. Das Einschalten bzw. Ausschalten der Streckbremsfunktion, d.h. das Umschalten zur Betriebsbremsfunktion, erfolgt somit innerhalb eines automatisch gewählten Zeitintervalls, welches optimal an einen Fahrzustand des Fahrzeugzuges angepasst ist.

In einer Weiterbildung ist die Streckbremsfunktion nur dann aktivierbar, wenn eine Koppelung des Anhängefahrzeugs an das Zugfahrzeug ermittelt ist und wenn zudem ein bestimmungsgemäß funktionierendes Antiblockiersystem an dem Anhängefahrzeug ermittelt ist. Über wenigstens eine elektrische Verbindung zwischen dem Zugfahrzeug und dem Anhängefahrzeug ist eine Koppelung des Anhängefahrzeugs an das Zugfahrzeug ermittelbar. Über diese elektrische Verbindung werden auch Sensordaten des Antiblockiersystems an dem Anhängefahrzeug an das Zugfahrzeug übermittelt. Aus diesen Sensordaten ist ein bestimmungsgemäßes Funktionieren des Antiblockiersystems an dem Anhängefahrzeug ermittelbar. Hierfür werden diese Sensordaten ggf. an die Steuereinrichtung übermittelt. Diese Weiterbildung der Erfindung dient der Sicherheit, indem ein Unterdrücken der Bremsen des Zugfahrzeugs verhindert wird, wenn kein Anhängefahrzeug an dieses Zugfahrzeug angekoppelt ist oder wenn die Gefahr des Blockierens von Rädern des Anhängefahrzeugs aufgrund eines ausgefallenen Antiblockiersystems besteht.

Bevorzugt ist die Streckbremsfunktion nur dann aktivierbar bzw. die aktivierte Streckbremsfunktion nur dann aufrechterhaltbar, wenn ein ermittelter Fahrzustand und/oder Fahrzeugzustand in einem hierfür zulässigen Bereich liegt. Insbesondere kann die Streckbremsfunktion nur dann aktiviert sein, wenn die Fahrgeschwindigkeit des Zugfahrzeugs bzw. des Fahrzeugzugs einen Grenzwert nicht überschreitet, wenn eine Kurvenfahrt ermittelt ist und/oder wenn wenigstens eine weitere Bremse des Fahrzeugs aktiviert ist. Diese weitere Bremse kann hierbei eine Motorbremse sein. Hierdurch wird sichergestellt, dass die Streckbremse nur bei vergleichsweise geringen Geschwindigkeiten und unter Bedingungen eingesetzt werden kann, welche zweckmäßig sind und einen eventuellen Missbrauch bzw. eine Verwendung bei ungeeigneten Fahrzuständen nicht zulassen.

Bevorzugt ist die aktivierte Streckbremsfunktion automatisch in Anhängigkeit von wenigstens einem ermittelten Fahrzustand und/oder Fahrzeugzustand deaktivierbar. Bspw. wird die Streckbremsfunktion deaktiviert, wenn die ermittelte Fahrgeschwindigkeit den maximalen Wert überschreitet, welcher für eine Aktivierung zulässig ist oder alternativ einen Wert überschreitet, welcher diesen maximal zulässigen Wert um mehr als ein erlaubtes Maß überschreitet. Auch eine ermittelte Fehlfunktion des Antiblockiersystems am Anhängefahrzeug bzw. eine Fehlfunktion des Antiblockiersystems am Zugfahrzeug kann in dieser Weiterbildung der Bremsanlage zu einer Deaktivierung der Streckbremsfunktion führen.

Ferner kann durch werksseitige Parametrierung kundenspezifisch oder auch länderspezifisch die Streckbremsfunktion in ihrer Intensität eingestellt werden.

Weitere Ausführungsformen ergeben sich aus den Ansprüchen sowie aus den anhand der Zeichnung näher erläuterten Ausführungsbeispielen. In der Zeichnung zeigt:
- Fig. 1: eine erfindungsgemäße Bremsanlage in einem Fahrzeugzug in vereinfachter schematischer Darstellung;
- Fig. 2: ein in der Bremsanlage gemäß Fig. 1 vorgesehenes Bedienelement als Druckknopf in einer Seitenansicht in vereinfachter schematischer Darstellung gemäß einem ersten Ausführungsbeispiel;
- Fig. 3: ein in der Bremsanlage gemäß Fig. 1 vorgesehenes Bedienelement als Taster mit Wippe und Lampe in einer Seitenansicht in vereinfachter schematischer Darstellung gemäß einem zweiten Ausführungsbeispiel;
- Fig. 4: eine in der Bremsanlage gemäß Fig. 1 vorgesehene Einheit aus einem Bedienelement und einer Einstellvorrichtung als Hebel mit Taster und separat angeordneter Lampe in einer Seitenansicht in vereinfachter schematischer Darstellung gemäß einem weiteren Ausführungsbeispiel;
- Fig. 5: ein in der Bremsanlage gemäß Fig. 1 vorgesehenes Bedienelement, eine Einstellvorrichtung und die Bremspedaleinrichtung mit integrierter Steuereinrichtung in einer Draufsicht in vereinfachter schematischer Darstellung gemäß einem weiteren Ausführungsbeispiel;
- Fig. 6: eine Bremsanlage mit einem Bedienelement, einer Einstellvorrichtung, einer Bremspedaleinrichtung, einem Hinterachsmodul, einem Vorderachsmodul und einem Anhängersteuerventil in vereinfachter schematischer Darstellung gemäß einem sechsten Ausführungsbeispiel;
- Fig. 7: eine Bremsanlage in vereinfachter schematischer Darstellung gemäß einem siebten Ausführungsbeispiel und
- Fig. 8: eine Bremsanlage in vereinfachter schematischer Darstellung gemäß einem achten Ausführungsbeispiel.

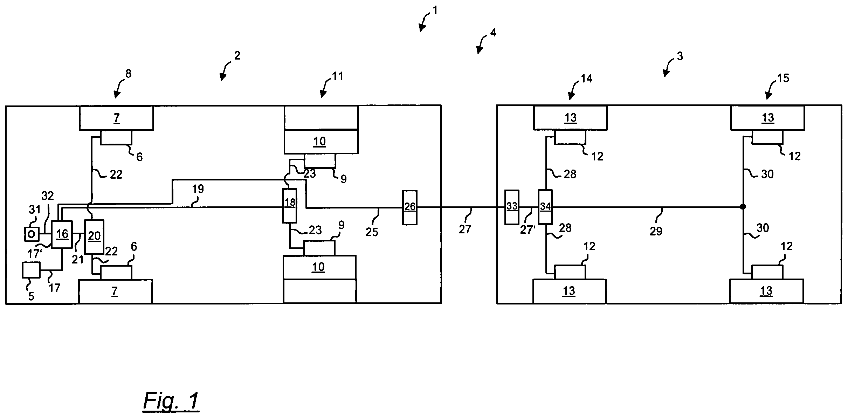

Fig. 1 zeigt die Bremsanlage 1 gemäß einem ersten Ausführungsbeispiel der Erfindung in einem aus einem Zugfahrzeug 2 und einem Anhängefahrzeug 3 bestehenden Fahrzeugzug 4. Die Bremsanlage 1 weist eine Bremspedaleinrichtung 5 in dem Zugfahrzeug 2 auf. In Erwiderung auf eine Betätigung eines Bremspedals dieser Bremspedaleinrichtung 5 sind erste Bremsen 6 an Rädern 7 einer Vorderachse 8 des Zugfahrzeugs 2 und weitere erste Bremsen 9 an Rädern 10 einer Hinterachse 11 des Zugfahrzeugs 2 betätigbar. Darüber hinaus werden zweite Bremsen 12 an Rädern 13 von Achsen 14 und 15 an dem Anhängefahrzeug 3 in Erwiderung auf eine Betätigung des Bremspedals der Bremspedaleinrichtung 5 betätigt.

Im Einzelnen erzeugt die Bremspedaleinrichtung 5 in Erwiderung auf eine Betätigung des Bremspedals ein Bremsanforderungssignal. Dieses Bremsanforderungssignal ist ein elektrisches Signal, welches einer Steuereinrichtung 16 über eine elektrische Leitung 17 zugeleitet wird. Sofern bei der Steuereinrichtung 16 kein Streckbremssteuersignal eingeht und auch kein Streckbremssteuersignal eine Streckbremsfunktion zuvor aktiviert hat, ist diese Streckbremsfunktion ausgeschaltet. Der Fahrzeugzug 4 ist mit den ersten Bremsen 6, 9 des Zugfahrzeugs 2 und den zweiten Bremsen 12 des Anhängefahrzeugs 3 jeweils nach Maßgabe des Bremsanforderungssignals gesteuert von der Steuereinrichtung 16 einbremsbar.

Die Steuereinrichtung 16 ist in ein elektronisches Steuergerät 17' integriert und mit einem vorderen Achsmodul 20 über eine elektrische Leitung 21 verbunden. Dieses Achsmodul 20 weist wenigstens ein Ventil zur Aussteuerung eines pneumatischen Drucks auf. Ferner ist die Steuereinrichtung 16 mit einem Achsmodul 18, welches als Hinterachsmodul ausgebildet ist, über eine elektrische Leitung 19 verbunden. Auch dieses Achsmodul 18 weist wenigstens ein Ventil zur Aussteuerung eines pneumatischen Drucks auf. Die Steuereinrichtung 16 betätigt die ersten Bremsen 6 mit dem von dem Ventil in dem Achsmodul 20 ausgesteuerten Luftdruck mit einer ersten Bremskraft und die weiteren ersten Bremsen 9 mittels des von dem Ventil in dem Achsmodul 18 ausgesteuerten Luftdruckes mit einer weiteren ersten Bremskraft.

Zur Betätigung der Bremsen 6 und 9 wird die ausgesteuerte Druckluft mittels integrierter Relaisventile luftmengenverstärkt. Ausgesteuerte pneumatische Drücke werden somit luftmengenverstärkt über Druckluftleitungen 22 bzw. 23 Bremszylindern der Bremsen 6 bzw. 9 zugeführt. Die Bremsen 6 und 9 werden somit pneumatisch betätigt.

Alternativ oder zusätzlich können die Bremsen 6, 9 und 12 elektromechanisch betätigbare Bremsen sein. In diesem Fall erfolgt die Ansteuerung der Bremsen 6, 9 und ggf. 12 von den Achsmodulen 20 bzw. 18 oder direkt vom elektronischen Steuergerät 17' über nicht dargestellte elektrische Leitungen. Auf Ventile in den Achsmodulen 20 und 18 und auf die Druckluftleitungen 22 und 23 kann in diesem Fall ggf. verzichtet werden.

Die Steuereinrichtung 16 steuert die Bremsen 12 des Anhängefahrzeugs 3 an. Hierfür ist diese Steuereinrichtung 16 über wenigstens eine elektrische Leitung 25 mit einem Anhängersteuerventil 26 verbunden. Druckluftleitungen 27, 27', 28, 29 und 30 verbinden das Anhängersteuerventil 26 mit den Bremsen 12 und belüften über diese Druckluftleitungen 27, 27', 28, 29 und 30 Bremszylinder der Bremsen 12 zum Betätigen dieser Bremsen 12. Eingangs am Anhängefahrzeug 3 gelangt Druckluft von der Druckluftleitung 27 hierbei zunächst über ein Anhängerbremsventil 33 in die Druckluftleitung 27'. Hiernach wird diese Druckluft in einem Anhängermodulator 34 luftmengenverstärkt und an die Druckluftleitungen 28 und 29 verteilt. Mittels des Anhängermodulators 34 sind ggf. unterschiedliche Bremsdrücke für die zweiten Bremsen 12 an der Achse 14 des Anhängefahrzeugs und der zweiten Bremse 12 an der weiteren zweiten Achse 15 des Anhängefahrzeugs aussteuerbar.

Die Bremsanlage 1 ist lediglich vereinfacht mit einigen für die Erfindung relevanten Komponenten dargestellt. Die Bremsanlage 1 weist bspw. zwei oder drei Bremskreise und ggf. auch eine pneumatische Redundanz auf, wobei die Bremspedaleinrichtung über Druckluftleitungen einen mittels des Bremspedals pneumatisch ausgesteuerten Druck an die Bremsen 6, 9 und 12 weitergibt. Auch die Betätigung der Bremsen 12 im Anhängefahrzeug 3 ist nur vereinfacht dargestellt. Tatsächlich ist neben der Druckluftleitung 27 noch eine weitere Druckluftleitung vorzusehen, welche dem Anhängefahrzeug 3 Druckluft aus einem Luftdruckvorratsbehälter bereitstellt. Ein ausgesteuerter pneumatischer Druck wird mit dieser Druckluft luftmengenverstärkt, bevor er den Bremsen 12 zugeführt wird.

Erfindungsgemäß ist in dem Zugfahrzeug 2 ein elektrisches Bedienelement 31 vorgesehen. In Erwiderung auf eine Betätigung des Bedienelements 31 wird über eine elektrische Leitung 32 ein Streckbremssteuersignal an die Steuereinrichtung 16 gesendet. Dieses Streckbremssteuersignal schaltet die Streckbremsfunktion ein und ggf. bei erneuter Betätigung des elektrischen Bedienelements 31 auch wieder aus. Bei eingeschalteter Streckbremsfunktion, d.h. bei gleichzeitigem oder vorhergehendem Empfangen des Streckbremssteuersignals, wird das Einbremsen des Zugfahrzeugs 2 mittels der ersten Bremsen 6 und 9 vollständig unterdrückt. Die ersten Bremsen 6 und 9 sind bei aktivierter Streckbremsfunktion in diesem ersten Ausführungsbeispiel der Bremsanlage in dem Fahrzeugzug 4 nicht in Erwiderung auf ein Bremsanforderungssignal betätigbar. Es werden lediglich die zweiten Bremsen 12 an dem Anhängefahrzeug 3 mit der zweiten Bremskraft oder eine verglichen mit der zweiten Bremskraft erhöhten Bremskraft betätigt. Die erhöhte Bremskraft wird bspw. von einer Verzögerungsregelung in der Steuereinrichtung 16 in Erwiderung auf eine sensierte Ist-Verzögerung, welche aufgrund der stillgelegten Bremsen 6 und 9 des Zugfahrzeugs 2 unterhalb einer von der Bremspedaleinrichtung 5 vorgegebenen Soll-Verzögerung liegt, bewirkt.

Das Streckbremssteuersignal ist in diesem ersten Ausführungsbeispiel ein elektrisches Signal. Alternativ kann es jedoch auch ein optisches Signal sein. Ein optisches Signal wird vorzugsweise über wenigstens eine Glasfaserleitung von dem elektrischen Bedienelement 31 an die Steuereinrichtung 16 gesendet. Alternativ kann diese Glasfaserleitung oder die elektrische Leitung 32 auch mit einer anderen Einheit elektrisch bzw. optisch verbunden sein, wobei diese andere Einheit eine Recheneinrichtung zur Steuerung der Streckbremsfunktion aufweist.

Die mittels des elektrischen Bedienelements 31 aktivierte Streckbremsfunktion kann durch erneute Betätigung dieses elektrischen Bedienelements 31 wieder deaktiviert werden. Alternativ kann jedoch auch ein weiteres Bedienelement zur Deaktivierung der Streckbremsfunktion vorgesehen sein. Auch eine zeitliche oder an sensierte Ereignisse gekoppelte Deaktivierung der Streckbremsfunktion ist alternativ möglich. Bspw. kann die Streckbremsfunktion nach Beendigung einer Betätigung der Bremspedaleinrichtung 5, d.h. nach einem Bremsvorgang bei Ausbleiben des Bremsanforderungssignals, deaktiviert werden.

Darüber hinaus ist die Streckbremsfunktion deaktiviert, wenn das Anhängefahrzeug 3 von dem Zugfahrzeug 2 abgekoppelt ist und/oder dem Zugfahrzeug kein funktionsbereites Antiblockiersystem am Anhängefahrzeug signalisiert wird. Eine Trennung des Anhängefahrzeugs 3 von dem Zugfahrzeug 2 wird von der Steuereinrichtung 16 oder einer anderen Einrichtung erkannt, welche in Erwiderung auf diese erkannte Trennung des Fahrzeugzugs 4 eine ggf. aktivierte Streckbremsfunktion deaktiviert und ein Aktivieren der Streckbremsfunktion nicht mehr zulässt, solange kein Anhängefahrzeug 3 an das Zugfahrzeug 2 angekoppelt ist und/oder kein bestimmungsgemäß funktionierendes Antiblockiersystem am Anhängefahrzeug dem Zugfahrzeug signalisiert wird.

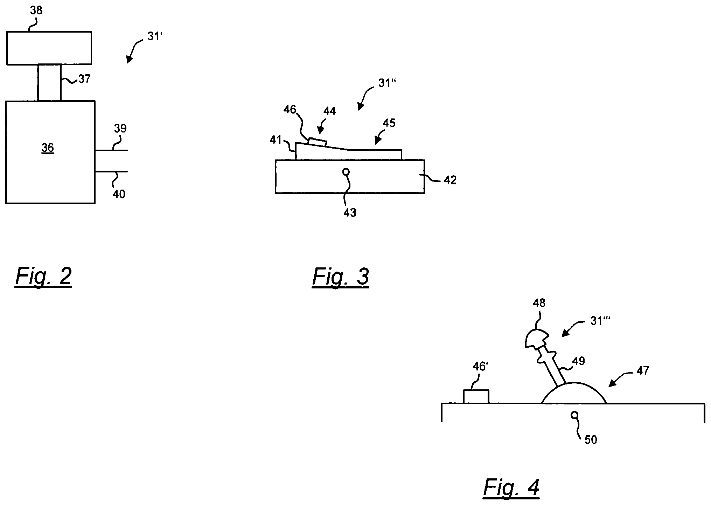

Fig. 2 zeigt das elektrische Bedienelement 31' gemäß einem zweiten Ausführungsbeispiel. Das elektrische Bedienelement 31' ist als ziehbarer und drückbarer Druckknopf ausgeführt. Es weist einen Grundkörper 36 auf, in welchen ein Stift 37 mit einem Handgriff 38 ragt. Der Handgriff 38 ist eine Verdickung, an welcher mittels einer Hand der an dem Handgriff 38 befestigte Stift 37 auf- und abbewegt werden kann. Nach einem Vorziehen des Handgriffs 38 und damit auch des Stiftes 37 verbindet ein nicht dargestelltes Schaltelement in dem Grundkörper 36 zwei elektrische Leiter 39 und 40, welche zusammen eine elektrische Leitung bilden. Ein über die elektrischen Leiter 39 und 40 geführtes Signal wird als Streckbremssteuersignal interpretiert, welches die Streckbremsfunktion einschaltet bzw. eingeschaltet lässt. Ein Drücken auf den Handgriff 38 drückt den Stift 37 in den Grundkörper 36 und trennt die elektrischen Leiter 39 und 40 voneinander. Dieses Trennen wird als Deaktivieren der Streckbremsfunktion interpretiert. Das Streckbremssteuersignal bleibt aus. Alternativ wäre auch ein inverses Schaltverhalten denkbar. Ferner sollten aus Redundanzgründen mehr als 2 Signalleitungen zwischen dem Bedienelement und der Steuereinrichtung vorgesehen sein.

Alternativ zu diesem zweiten Ausführungsbeispiel ist das elektrische Bedienelement 31' derart ausgebildet, dass es lediglich ein elektrisches Signal bzw. einen elektrischen Impuls über die elektrische Leitung bzw. den oder die elektrischen Leiter 39, 40 sendet, wenn das Bedienelement betätigt wird. Das Signal zum Ausschalten der Streckbremsfunktion ist hierbei ein anderes, als das zum Einschalten der Streckbremsfunktion verwendete Signal. Bspw. kann es sich bei dem Signal um eine Folge von Impulsen unterschiedlicher Dauer, unterschiedlicher zeitlicher Abstände und/oder unterschiedlicher Anzahl handeln. Auch Signale unterschiedlicher Frequenz können ein Einschalten von einem Ausschalten unterscheiden.

Fig. 3 zeigt das elektrische Bedienelement 31", welches als Taster mit Wippe 41 ausgebildet ist. Diese Wippe 41 ist kippbar auf einem Grundkörper 42 um eine Kippachse 43 angeordnet. Das Bedienelement 31" ist in zwei Schaltzuständen schaltbar, wobei in einem ersten Schaltzustand die Streckbremsfunktion aktiviert und in einem zweiten Schaltzustand diese Streckbremsfunktion deaktiviert wird bzw. bleibt. Zwischen diesen beiden Schaltzuständen ist durch Drücken auf einen ersten Druckbereich 44 und einen zweiten Druckbereich 45 oder durch ein nochmaliges Drücken auf den ersten Druckbereich 44 zu wechseln. In der Darstellung ist der zweite Druckbereich 45 gedrückt und die Streckbremsfunktion deaktiviert. Durch Drücken auf den ersten Druckbereich 44 kippt die Wippe 41, senkt den ersten Druckbereich 44 ab und hebt den zweiten Druckbereich 45 an. Während der erste Druckbereich 44 abgesenkt ist, ist die Streckbremsfunktion aktiviert, was einen Bediener des Bedienelements 31" durch ein Leuchten einer Lampe 46 optisch signalisiert wird. Die Lampe 46 ist hierbei bevorzugt eine Leuchtdiode (LED). Alternativ kann jedoch bspw. auch eine Glühlampe mit einem Glühfaden oder ein anderes Leuchtelement, welches elektrische Energie in sichtbares Licht wandelt, verwendet werden.

Fig. 4 zeigt eine Einheit des elektrischen Bedienelements 31"' mit einer Einstellvorrichtung 47 zur Einstellung eines Unterdrückungsgrades und eine abseits dieser Einheit angeordneten Lampe 46' zum Anzeigen des jeweiligen Schaltzustandes des Bedienelements 31"'. Das Bedienelement 31"' weist einen Handknauf 48 auf, welcher zum Aktivieren der Streckbremsfunktion durch Ziehen von einem ersten Schaltzustand in einen zweiten Schaltzustand gebracht und durch Drücken wieder in den ersten Schaltzustand zurückgebracht werden kann. Der Handknauf 48 ist an einem Hebel 49 befestigt und kann zusammen mit diesem Hebel 49 um eine Achse 50 verschwenkt werden. Durch Verschwenken des Hebels 49 um die Achse 50 kann der Unterdrückungsgrad, d.h. das Maß mit dem eine Betätigung der ersten Bremsen 6 und 9 des Zugfahrzeugs 2 unterdrückt wird, stufenlos eingestellt werden. Es sind somit stufenlos verschiedene Einstellungen des Unterdrückungsgrades wählbar. In einer ersten Einstellung wird das Einbremsen des Zugfahrzeugs 2 nur geringfügig unterdrückt. Durch Verschwenken des Hebels 49 gelangt man zu einer zweiten Einstellung, in der bei gleichem Bremsanforderungssignal das Einbremsen des Zugfahrzeugs 2 stärker unterdrückt wird. Bei aktivierter Streckbremsfunktion, d.h. bei gezogenem Handknauf 48 ist die Lampe 46' leuchtend geschaltet, um auf die eingeschaltete Streckbremsfunktion hinzuweisen bzw. davor zu warnen.

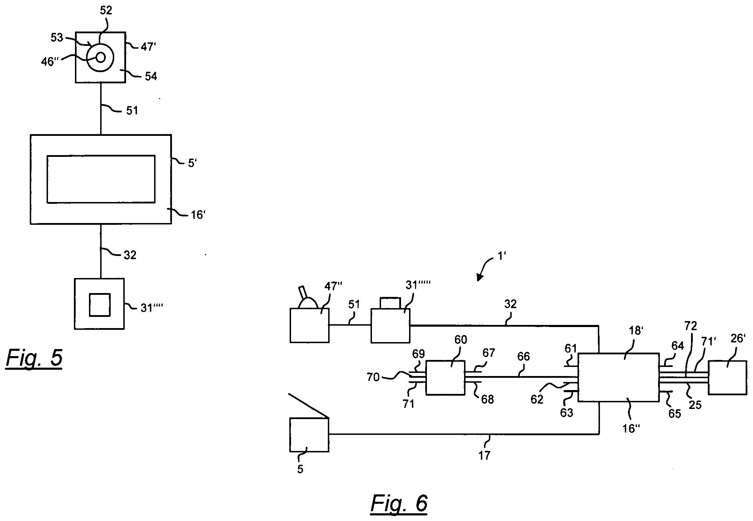

Fig. 5 zeigt das elektrische Bedienelement 31"", die Einstellvorrichtung 47' und die Bremspedaleinrichtung 5' mit integrierter Steuereinrichtung 16' gemäß einem fünften Ausführungsbeispiel in vereinfachter schematischer Darstellung. Das elektrische Bedienelement 31"" ist als Fußschalter ausgeführt, welcher in einer Fahrerkabine in der Nähe der Bremspedaleinrichtung 5' angeordnet ist, so dass er von einem Fahrer während der Fahrt mit einem seiner Füße erreichbar ist. Ein in Erwiderung auf eine Betätigung des Bedienelements 31"" erzeugtes Streckbremssteuersignal wird über die elektrische Leitung 32 der Steuereinrichtung 16', welche in der Bremspedaleinrichtung 5' angeordnet ist, bereitgestellt. Von der Bremspedaleinrichtung 5' wird in Erwiderung auf eine Betätigung des Bremspedals der Bremspedaleinrichtung 5' ein Bremsanforderungssignal erzeugt und direkt der Steuereinrichtung 16' bereitgestellt. Die Steuereinrichtung 16' und damit die Bremspedaleinrichtung 5' ist ferner über eine elektrische Leitung 51 mit der Einstellvorrichtung 47' verbunden. Diese Einstellvorrichtung 47' ist vorzugsweise an einem Armaturenbrett angeordnet, so dass sie von einer Hand von einem vor diesem Armaturenbrett sitzenden und das Zugfahrzeug 2 fahrenden Fahrer erreicht werden kann. Die Einstellvorrichtung 47' ist als Drehschalter ausgeführt, welcher einen Drehknopf 52 mit einem Zeiger 53 aufweist. Durch Drehen an dem Drehknopf 52 kann der Unterdrückungsgrad zum Einbremsen des Zugfahrzeugs 2 mittels der ersten Bremsen 6, 9 gewählt werden. Dieser Unterdrückungsgrad wird hierbei mittels des Zeigers 53 auf einer an einem Grundkörper 54 angebrachten Skala angezeigt. Abweichend hiervon kann alternativ oder zusätzlich der Unterdrückungsgrad analog mittels eines externen Zeigers oder digital mittels einer Digitalanzeige, welche bspw. in Zahlen den Unterdrückungsgrad in Prozent ausgibt, angezeigt werden.

Die Einstellvorrichtung weist darüber hinaus an dem Drehknopf 52 die Lampe 46" des elektrischen Bedienelements 31"" auf. Diese Lampe 46" zeigt einem Fahrer somit am Armaturenbrett an, ob die Streckbremsfunktion mittels des elektrischen Bedienelements 31"" aktiviert oder deaktiviert ist. Angesteuert wird die Lampe 46" hierbei über die elektrische Leitung 51 oder alternativ über eine weitere elektrische Leitung, welche entweder von der Steuereinrichtung 16' zu der Einstellvorrichtung 47' oder alternativ von dem elektrischen Bedienelement 31"" zu der Einstellvorrichtung 47' geführt wäre.

Fig. 6 zeigt die Bremsanlage 1' gemäß einem sechsten Ausführungsbeispiel in vereinfachter schematischer Darstellung, wobei nur einige für die Erfindung relevante Komponenten der Bremsanlage 1' dargestellt sind.

Die Bremsanlage 1' weist die Bremspedaleinrichtung 5, das elektrische Bedienelement 31""', die Einstellvorrichtung 47", das Achsmodul 18', ein Achsmodul 60 und das Anhängersteuerventil 26' auf. Die Steuereinrichtung 16" ist in das Achsmodul 18', welches ein Hinterachsmodul ist, integriert. Ein mittels der Bremspedaleinrichtung 5 erzeugtes Bremsanforderungssignal wird der Steuereinrichtung 16" über die elektrische Leitung 17 bereitgestellt. Das Streckbremssteuersignal wird dieser Steuereinrichtung 16" über die elektrische Leitung 32 von dem elektrischen Bedienelement 31""' bereitgestellt. Das den Unterdrückungsgrad repräsentierende Signal, welches mittels der Einstellvorrichtung 47" eingestellt wird, wird zunächst über die elektrische Leitung 51 an das elektrische Bedienelement 31""' geleitet. Von dort aus wird dieses den Unterdrückungsgrad repräsentierende Signal in dem Streckbremssteuersignal, d.h. zusammen mit diesem Streckbremssteuersignal, über die elektrische Leitung 32 der Steuereinrichtung 16" bereitgestellt.

Die Achsmodule 18' und 60 weisen weitere Anschlüsse auf. Das Achsmodul 18' weist einen Druckluftanschluss 61 zur Versorgung mit Druckluft aus einem nicht dargestellten Druckluftvorratsbehälter auf. Darüber hinaus ist das Achsmodul 18' über eine weiteren Druckluftanschluss 62 und eine nicht dargestellte Druckluftleitung mit der Bremspedaleinrichtung 5 verbunden, um hierüber eine pneumatische Redundanz herzustellen, mittels der der Fahrzeugzug 4 auch bei Ausfall der Steuerelektronik 16" noch sicher einbremsbar ist. Ein Anschluss 63 verbindet das Achsmodul 18' bzw. die Steuereinrichtung 16" zur Versorgung mit elektrischer Energie mit einer nicht dargestellten Batterie. In dem Achsmodul 18' wird mittels wenigstens eines Ventils ein pneumatischer Druck ausgesteuert, welcher über Druckluftanschlüsse 64 und 65 und weiter über nicht dargestellte Druckluftleitungen Bremszylindern der Bremsen 9 an der Achse 11 des Zugfahrzeugs 2 bereitstellbar ist.

Das Achsmodul 60 empfängt Steuersignale von der Steuereinrichtung 16" über eine elektrische Leitung 66. Die Steuerung der Bremsen 6 an der Vorderachse 8 des Zugfahrzeugs 2 durch das Achsmodul 60 erfolgt analog zu der eben beschriebenen Steuerung der Bremsen 9 an der Hinterachse 11 durch das Hinterachsmodul 18'. Insbesondere weist auch das Achsmodul 60 wenigstens ein Ventil zur Aussteuerung eines pneumatischen Drucks auf, wobei dieser ausgesteuerte pneumatische Druck über Druckluftanschlüsse 67 und 68 und nicht dargestellte Druckluftleitungen Bremszylindern der Bremsen 6 an der Vorderachse 8 des Zugfahrzeugs 2 bereitstellbar ist. Darüber hinaus weist das Vorderachsmodul 60 einen Druckluftanschluss 69, welcher mit einem nicht dargestellten Druckluftvorratsbehälter pneumatisch verbunden ist, und einen weiteren Druckluftanschluss 70, welcher über eine nicht dargestellte Druckluftleitung mit der Bremspedaleinrichtung 5 zur Bereitstellung eines Redundanzdruckes verbunden ist, auf. Ein Anschluss 71 für eine elektrische Energieversorgung verbindet das Achsmodul 60 mit einer nicht dargestellten Batterie.

Das Achsmodul 18' weist zur Steuerung der Bremsen 12 des Anhängefahrzeugs 3 über das Ventil zur Steuerung der Bremsen 9 hinausgehend wenigstens ein zusätzliches Ventil auf. Mittels dieses Ventils ist ein pneumatischer Druck aussteuerbar und über eine Druckluftleitung 71' dem Anhängersteuerventil 26' bereitstellbar. Ein Vorratsluftdruck aus einem Luftdruckvorratsbehälter wird dem Anhängersteuerventil 26' zudem über eine weitere Druckluftleitung 72 über das Achsmodul 18' bereitgestellt. Alternativ kann diese Druckluftleitung 72 anstelle zu der Verbindung mit dem Achsmodul 18' auch direkt mit einem Druckluftvorratsbehälter verbunden sein. Zur elektrischen Steuerung des Anhängersteuerventils ist darüber hinaus die elektrische Leitung 25 vorgesehen. Nicht dargestellte Druckluftleitungen und ggf. auch elektrische Leitungen verbinden das Anhängefahrzeug 3 mit dem Anhängersteuerventil 26'. Alle in dem Anhängefahrzeug 3 angeordneten Komponenten der Bremsanlage 1' sind über dieses Anhängersteuerventil 26' mit Druckluft bzw. mit elektrischer Energie versorgbar.

Abweichend von dem hier gezeigten sechsten Ausführungsbeispiel weist die Steuereinrichtung 16", das Achsmodul 60 oder das Achsmodul 18' wenigstens einen Anschluss auf, über den es mit wenigstens einem Sensor verbunden ist. Bspw. weist die Bremsanlage 1' Radgeschwindigkeitssensiermittel an den Rädern 7, 10 und ggf. auch 13 auf. Diese Radgeschwindigkeitssensiermittel erfassen Bewegungen der Räder 7, 10 bzw. 13 und stellen sensierte Daten bzw. Signale einem Antiblockiersystem und in dieser von dem sechsten Ausführungsbeispiel abweichenden Ausführungsform der Erfindung auch der Steuereinrichtung 16" oder einer anderen Einrichtung mit einer Recheneinrichtung bereit, um aus diesen Daten einen geeigneten Unterdrückungsgrad zu berechnen und automatisch einzustellen. Alternativ oder zusätzlich sind weitere Sensoren, bspw. wenigstens ein Beschleunigungssensor und/oder ein Lastsensor, vorgesehen, welche Daten bzw. Signale bereitstellen, in deren Abhängigkeit der Unterdrückungsgrad eingestellt wird.

Das automatische Einstellen des Unterdrückungsgrades erfolgt alternativ zu dem manuellen Einstellen. Ggf. kann ein Bedienelement zum Umschalten zwischen einer automatischen Einstellbarkeit und einer manuellen Einstellbarkeit vorgesehen sein.

Alternativ kann ein bezogen auf einen Fahrzustand ungeeigneter manuell eingestellter Unterdrückungsgrad erkannt und automatisch korrigiert werden. In einer weiteren alternativen Ausführungsform wird automatisch ein geeigneter Einstellbereich des Unterdrückungsgrades festgestellt. Ein manuelles Einstellen des Unterdrückungsgrades ist hierbei nur noch innerhalb dieses Einstellbereiches möglich.

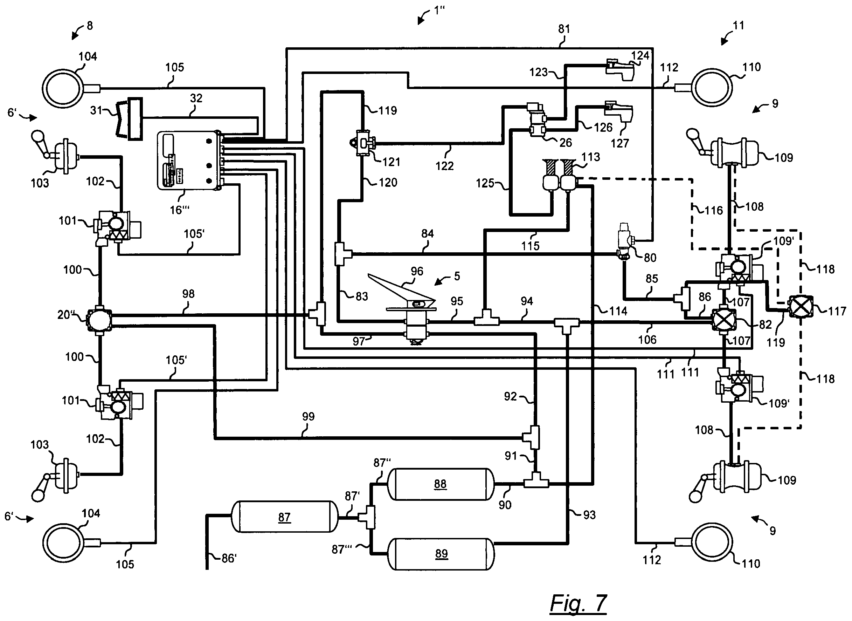

Fig. 7 zeigt die Bremsanlage 1" gemäß einem siebten Ausführungsbeispiel der Erfindung. Diese Bremsanlage 1" ist für ein Zugfahrzeug 2 vorgesehen, an welches ein Anhängefahrzeug 3 ankoppelbar ist. Die Bremsanlage 1" weist die Steuereinrichtung 16"' und das über die elektrische Leitung 32 mit dieser Steuereinrichtung 16"' verbundene elektrische Bedienelement 31 auf. Ferner weist die Bremsanlage 1" die Bremspedaleinrichtung 5, das Relaisventil 20" und Bremsen 6' bzw. 9 an Achsen 8 und 11 des Zugfahrzeugs 2 auf.

Die Streckbremsfunktion wirkt in diesem Ausführungsbeispiel auf die Bremsen 6' der Vorderachse 8, welche dritte Bremsen sind, sowie ggf. auf Bremsen eines angekoppelten Anhängefahrzeugs 3. Eine Betätigung der Bremsen 9 an der Hinterachse 11 des Zugfahrzeugs 2 wird in diesem siebten Ausführungsbeispiel der Erfindung bei aktivierter Streckbremsfunktion unterdrückt. Für dieses Unterdrücken ist ein Absperrmagnetventil 80 vorgesehen, welches im Falle einer mittels des Bedienelements 31 aktivierten Streckbremsfunktion von der Steuereinrichtung 16"' über eine elektrische Leitung 81 angesteuert wird und eine pneumatische Verbindung zwischen der Bremspedaleinrichtung 5 und einem Relaisventil 82 trennt. Diese pneumatische Verbindung ist bei deaktivierter Streckbremsfunktion über Druckluftleitungen 83, 84, 85 und 86 gegeben. In Erwiderung auf eine Betätigung des Bedienelements 31 ist somit eine pneumatische Verbindung zwischen den Druckluftleitungen 84 und 85, d.h. in der Druckluftleitung 84, 85 mittels des Absperrmagnetventils 80 absperrbar. Die Steuereinrichtung 16"' ist hierbei derart ausgebildet, dass das Bedienelement 31 im Wesentlichen dauerhaft betätigt werden muss, um die Streckbremsfunktion eingeschaltet zu lassen. "Im Wesentlichen" bedeutet hierbei, dass die Streckbremsfunktion erst deaktiviert wird, wenn das Bedienelement 31 über einen vordefinierten oder definierbaren Zeitraum, bspw. 50 ms, nicht betätigt worden ist. Ein Deaktivieren der Streckbremsfunktion erfolgt somit erst mit zeitlicher Verzögerung, so dass ein versehentliches Nichtbetätigen des Bedienelements 31, bspw. aufgrund von Erschütterungen während einer Fahrt des Zugfahrzeugs 2, nicht zu einem versehentlichen Deaktivieren der Streckbremsfunktion führt. Darüber hinaus ist die Steuerelektronik 16"' derart ausgebildet, dass bei längerer Nichtbetätigung des Bedienelements 31, d.h. nach Überschreiten dieser vordefinierten bzw. definierten Zeitdauer, das Absperrmagnetventil 80 derart über die elektrische Leitung 81 angesteuert wird, dass dieses Absperrmagnetventil 80 zunächst eine gedrosselte Verbindung zwischen den Druckluftleitungen 84 und 85 schafft, so dass sich ein pneumatischer Druck in der Druckluftleitung 85 nicht sprunghaft, sondern gedrosselt einem ausgesteuerten pneumatischen Druck in der Druckluftleitung 84 angleicht. Hierfür wird das Absperrmagnetventil 80 mit kurzen Impulsen elektrisch angesteuert, welche dieses Absperrmagnetventil 80 in sehr schneller Folge alternierend öffnen und wieder schließen. Alternativ könnte jedoch auch ein anderes Absperrmagnetventil verwendet werden, mittels welchem in verschiedenen Stufen oder stufenlos ein Luftdurchsatz variierbar ist.

Die Steuereinrichtung 16"' ist ferner derart ausgebildet, dass es bei deaktivierter Streckbremsfunktion und Aktivierung dieser Streckbremsfunktion während eines Bremsvorganges durch entsprechende Ansteuerung des Absperrmagnetventils 80 die Verbindung zwischen den Druckluftleitungen 84 und 85 nicht sprunghaft, sondern innerhalb einer kurzen Zeitdauer absperrt. Die Ansteuerung des Absperrmagnetventils 81 über die elektrische Leitung 82 kann hierbei wieder mittels kurzer elektrischer Impulse oder mittels eines anders ausgebildeten Absperrmagnetventils mit mehr als zwei Schaltzuständen erfolgen. Ggf. kann zusätzlich eine Ventileinheit in der Druckluftleitung 85 oder 86 vorgesehen sein, mittels welcher diese Druckluftleitung 85 bzw. 86 entlüftbar ist, um zum Lösen der Bremsen 9 Druck in den Druckluftleitungen 85 und 86 abzubauen.

Die Bremsanlage 1" ist darüber hinaus als standardmäßige Bremsanlage mit einem elektronischen Bremssystem ausgebildet. Zentrale Steuerfunktionen dieses elektronischen Bremssystems werden von der Steuereinrichtung 16"' übernommen, welche somit gleichzeitig eine Zentrale dieses elektronischen Bremssystems ist.

Ein nicht dargestellter Kompressor stellt der Bremsanlage 1" ggf. nach Aufbereitung in einer Druckluftaufbereitungseinheit Druckluft über eine Druckluftleitung 86' bereit. Diese Druckluftleitung 86' führt zu einem Druckluftvorratsbehälter 87, welcher diese Druckluft über Druckluftleitungen 87', 87" und 87"' weiterleitet und hiermit weitere Druckluftvorratsbehälter 88 und 89 speist. Der Druckluftvorratsbehälter 88 ist hierbei einem ersten Bremskreis und der Druckluftvorratsbehälter 89 einem zweiten Bremskreis zugeordnet. Vornehmlich sind mittels des ersten Bremskreises die Bremsen 6' an der Vorderachse 8 und mittels des zweiten Bremskreises die Bremsen 9 an der Hinterachse 11 des Zugfahrzeugs 2 betätigbar. Darüber hinaus können nicht dargestellte Bremsen eines angehängten Anhängefahrzeugs mittels Druckluft aus einem dieser zwei Bremskreise, nämlich demjenigen mit dem höheren pneumatischen Druck, betätigt werden.

Druckluft aus den Druckluftvorratsbehältern 88 und 89 wird über Druckluftleitungen 90, 91, 92, 93, 94 und 95 der Bremspedaleinrichtung 5 bereitgestellt. Die Bremspedaleinrichtung 5 weist ein Bremspedal 96 auf, welches manuell mit einem Fuß bedient werden kann. Mittels dieses Bremspedals 96 kann direkt ein pneumatischer Druck in die Druckluftleitung 83 und in einer Druckluftleitung 97 ausgesteuert werden,.

Ein nicht dargestellter Drucksensor misst den ausgesteuerten Druck der Bremspedaleinrichtung 5 beispielsweise in einer der Druckluftleitungen 97, 98, 119, 83, 84 oder 120 und ist über eine nicht dargestellte elektrische Leitung mit der Steuereinrichtung 16"' verbunden. Die Steuereinrichtung 16"' analysiert das Bremsanforderungssignal und erkennt eine gewollte Vollbremsung. Bspw. wird eine Vollbremsung, d.h. eine gewollte größtmögliche Verzögerung, dann festgestellt, wenn das Bremspedal 96 vollständig oder sehr schnell betätigt wird, d.h. eine hohe Soll-Verzögerung bzw. ein sehr schnell wachsender Soll-Bremsdruck erkannt wird. Bei aktivierter Streckbremsfunktion führt ein ermittelter größtmöglicher Verzögerungswunsch dazu, dass die Steuereinrichtung 16"' die Streckbremsfunktion deaktiviert. Auch bei diesem Deaktivieren der Streckbremsfunktion während eines Bremsvorgangs wird das Einbremsen des Zugfahrzeugs 2 mittels der ersten Bremsen 9 an der Hinterachse 11 zunehmend weniger unterdrückt, bis es schließlich nicht mehr unterdrückt wird. Die Zeitdauer für eine derartige Aktion bei einem automatischen oder auch manuell veranlassten Deaktivieren der Streckbremsfunktion während eines Bremsvorganges ist hierbei entweder fest vorgegeben, kann aber auch in Abhängigkeit von Sensorwerten nicht dargestellter Sensoren, welche einen Fahrzustand und/oder Fahrzeugzustand sensieren, verringert oder aber auch vergrößert werden.

Zum Betätigen der Bremsen 6' an der Vorderachse 8 wird der pneumatische Druck aus der Druckluftleitung 97 über eine Druckluftleitung 98 dem Relaisventil 20" bereitgestellt, welches diesem pneumatischen Druck, welcher ein Steuerdruck ist, mittels Druckluft aus dem Druckluftvorratsbehälter 88, welche über eine Druckluftleitung 99 zugeleitet wird, luftmengenverstärkt. Diese luftmengenverstärkte Druckluft wird über Druckluftleitungen 100, Ventileinheiten 101, Druckluftleitungen 102 und schließlich Membranteilen von Bremszylindern 103 bereitgestellt. Mittels dieser Bremszylinder 103 können die Bremsen 6' betätigt werden.

Radsensiermittel 104 sensieren Raddrehgeschwindigkeiten von einzubremsenden Rädern an der Achse 8. Signale dieser Radsensiermittel 104 werden über elektrische Leitungen 105 der Steuerelektronik 16"' zugeleitet. Diese Steuereinrichtung 16"' analysiert die über die elektrischen Leitungen 105 eingehenden Sensorsignale der Radsensiermittel 104 und erkennt ggf. eine Blockierneigung bzw. einen Schlupf der Räder an der Achse 8. Bei erkannter Blockierneigung werden über elektrische Leitungen 105' die Ventileinheiten 101 angesteuert, um mittels dieser Ventileinheiten 101 die Membranteile der Bremszylinder 103 über die Druckluftleitungen 102 zu entlüften bzw. den pneumatischen Druck in diesen Membranteilen zu senken oder zumindest nicht weiter zu erhöhen. Es wird somit eine Antiblockiersystem-Funktion bereitgestellt, welche einem Blockieren der Räder an der Achse 8 entgegenwirkt.

Von der Steuereinrichtung 16"' wird erkannt, ob die Antiblockiersystem-Funktion des Zugfahrzeugs bestimmungsgemäß funktioniert. Bei erkanntem nicht bestimmungsgemäßen Funktionieren der Antiblockiersystem-Funktion wird ein Einlegen der Streckbremsfunktion verhindert bzw. eine aktivierte Streckbremsfunktion deaktiviert.

Die Bremsen 9 der Hinterachse 11 des Zugfahrzeugs 2 werden über den zweiten Bremskreis mittels Druckluft aus dem Druckluftvorratsbehälter 89 betätigt. Ein Steuerdruck in der Druckluftleitung 86 wird hierbei in dem Relaisventil 82 mittels Druckluft luftmengenverstärkt, welche über eine Druckluftleitung 106 und die Druckluftleitung 93 aus dem zweiten Druckluftvorratsbehälter 89 zugeführt wird. Mittels dieser luftmengenverstärkten Druckluft werden über Druckluftleitungen 107 und 108 Membranteile von kombinierten Federspeicherbremszylindern 109 belüftet und auch wieder entlüftet. Eine Antiblockiersystem-Funktion wird hierbei analog zu der Antiblockiersystem-Funktion an der Vorderachse 8 des Fahrzeugs 2 mittels Ventileinheiten 109' in Verbindung mit Radsensiermitteln 110 und der Steuereinrichtung 16"' hergestellt, wobei die Ventileinheiten 109' mittels elektrischer Leitungen 111 und die Radsensiermittel 110 mittels elektrischer Leitungen 112 mit der Steuereinrichtung 16"' verbunden sind und von dieser gesteuert werden bzw. an diese Signale senden.

Die Bremsanlage 1" weist darüber hinaus eine Feststellbremsfunktion auf. Diese Feststellbremsfunktion kann von einer Feststellbremsbetätigungseinrichtung 113 getrennt für das Zugfahrzeug 2 und ein ggf. an dieses Zugfahrzeug 2 angekoppeltes Anhängefahrzeug 3 aktiviert und deaktiviert werden. Eine Druckluftversorgung findet hierbei aus beiden Druckluftvorratsbehältern 88 und 89 bzw. aus dem Druckluftbehälter 88, 89 mit dem höheren Druck statt. Die Feststellbremsbetätigungseinrichtung 113 wird deshalb über Druckluftleitungen 114 und 115 mit beiden Bremskreisen verbunden. Im Fahrbetrieb sind Federspeicherteile der Federspeicherbremszylinder 109 über die Feststellbremsbetätigungseinrichtung 113, eine Druckluftleitung 116, eine Einheit 117 und Druckluftleitungen 118 belüftet. Die Einheit 117 besteht aus einem Schnellentlüftungsventil und einem Doppelrückschlagventil, um ein schnelles Entlüften und eine Überlastschutzfunktion der Federspeicherbremszylinder zu ermöglichen. Zum Einlegen der Feststellbremse wird die Feststellbremsbetätigungseinrichtung 113 betätigt, woraufhin die Federspeicherteile der Federspeicherbremszylinder 109 entlüftet werden. Um eine Überbeanspruchung der Bremsen 9 bei gleichzeitig mittels der Betriebsbremsfunktion und der Feststellbremsfunktion betätigter Bremse zu vermeiden, ist eine Druckluftleitung 119 vorgesehen, welche den Steuerdruck für die Betriebsbremsfunktion bzw. Streckbremsfunktion an einen Eingang der Einheit 117 leitet. Die Einheit 117 sorgt dafür, dass in den Federspeicherteilen der Federspeicherbremszylinder 109 immer mindestens der gleiche oder ein höherer Druck anliegt als in den Membranteilen dieser Federspeicherbremszylinder 109.

Die Bremsanlage 1" steuert ferner ggf. Bremsen an dem Anhängefahrzeug 3. Über Druckluftleitungen 119 und 120 werden die aus der Druckluft von den beiden Bremskreisen mittels der Bremspedaleinrichtung 6 ausgesteuerten pneumatischen Drücke einem Select-High-Ventil 121 zugeleitet. Dieses Select-High-Ventil 121 beaufschlagt eine Druckluftleitung 122 mit dem höheren dieser beiden pneumatischen Drücke. Über das Anhängersteuerventil 26 und eine Druckluftleitung 123 gelangt dieser höhere pneumatische Druck als Steuerdruck an einen Druckluftanschluss 124, der mit einem Anhängefahrzeug verbindbar ist. Ausgehend von der Feststellbremsbetätigungseinrichtung 113 wird diesem Anhängefahrzeug ferner ein Vorratsluftdruck über eine Druckluftleitung 125, das Anhängersteuerventil 26, eine Druckluftleitung 126 und einen Druckluftanschluss 127 bereitgestellt.

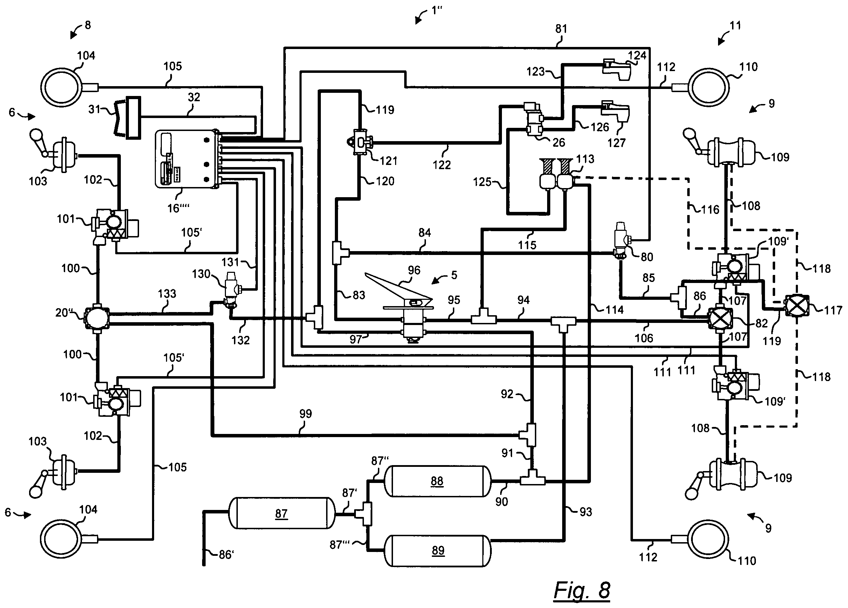

Fig. 8 zeigt die Bremsanlage 1"' gemäß einem achten Ausführungsbeispiel, welches weitgehend dem siebten Ausführungsbeispiel von Fig. 7 gleicht. Jedoch ist bei aktivierter Streckbremsfunktion nicht nur die erste Bremse 9 an der zweiten Achse 11 des Zugfahrzeugs 2 unterdrückbar. Vielmehr wird in diesem Ausführungsbeispiel auch die Bremse 6 an der ersten Achse 8 des Zugfahrzeugs 2, welche in diesem Fall keine dritte, sondern eine weitere erste Bremse ist, unterdrückt. Die Bremsanlage 1"' weist deshalb eine Steuereinrichtung 16"" auf, welche im Vergleich zu der Steuereinrichtung 16"' von Fig. 7 zusätzlich ein Absperrmagnetventil 130 über eine elektrische Leitung 131 ansteuert. Ein ausgesteuerter Steuerdruck aus dem ersten Bremskreis gelangt somit von der Bremspedaleinrichtung 5 über die Druckluftleitung 97, eine Druckluftleitung 132, das Absperrmagnetventil 130 und eine Druckluftleitung 133 an das Relaisventil 20'. Die Funktionsweise des Absperrmagnetventils 130 gleicht hierbei der Funktionsweise des Absperrmagnetventils 80, welches in der Figurenbeschreibung zu Fig. 7 beschrieben wurde.

Die Steuereinrichtung 16, 16', 16", 16"' und 16"" empfängt darüber hinaus über eine nicht dargestellte elektrische Leitung Signale eines Antiblockiersystems des Anhängefahrzeugs 3. Insbesondere ermittelt die Steuereinrichtung 16, 16', 16", 16"'und 16"" aus diesen Signalen, ob das Antiblockiersystem des Anhängefahrzeugs 3 bestimmungsgemäß funktioniert bzw. empfängt Signale, dass dieses Antiblockiersystem bestimmungsgemäß funktioniert oder nicht funktioniert. Im Fall einer unterbrochenen elektrischen Leitung zwischen dem Anhängefahrzeug 3 und dem Zugfahrzeug 2 oder im Fall eines nicht bestimmungsgemäß funktionierenden Antiblockiersystems des Anhängefahrzeugs 3 wird ein Aktivieren der Streckbremsfunktion verhindert. Falls ein nicht bestimmungsgemäß funktionierendes Antiblockiersystem des Anhängefahrzeugs 3 bei aktivierter Streckbremsfunktion erkannt wird, wird diese Streckbremsfunktion deaktiviert.

In einem alternativen nicht dargestellten Ausführungsbeispiel kann die Steuereinrichtung 16, 16', 16", 16"' und 16"" derart ausgebildet sein, dass die Streckbremsfunktion nur unter definierten Fahrzuständen aktiviert und ggf. auch aufrechterhalten werden kann. Ein Aktivieren der Feststellbremsfunktion ist bspw. nur dann möglich, wenn eine für den Fahrzeugzug 4 ermittelte Fahrgeschwindigkeit unter einem definierten Grenzwert, bspw. 40 km/h, liegt. Zudem muss eine Kurvenfahrt ermittelt sein. Eine Kurvenfahrt ist bspw. durch Vergleich von Sensordaten der Radsensiermittel 104 und 110 einer linken und einer rechten Seite des Zugfahrzeugs 2 ermittelbar. Alternativ oder zusätzlich können auch Bewegungen bzw. Einschläge eines Lenkrades mittels eines Lenkradwinkelsensors hierzu sensiert werden. Zudem sollte wenigstens eine weitere Bremse des Zugfahrzeugs 2 aktiviert sein. Diese weitere Bremse kann bspw. eine Motorbremse sein. Wenn nun die Geschwindigkeit wieder zunimmt und um mehr als bspw. 10 km/h über dem oben genannten Grenzwert für die Kriterien zur Aktivierung der Streckbremsfunktion liegt, wird die Streckbremsfunktion automatisch deaktiviert. Auch ein Motorstart, eine ermittelte Fehlfunktion des Antiblockiersystems oder andere Fahrzustände und/oder Fahrzeugzustände können eine aktivierte Streckbremsfunktion automatisch deaktivieren.

Insgesamt verbessert die Erfindung vorteilhaft bekannte Bremsanlagen mit einer Streckbremsfunktion, indem eine Streckbremse mit dem vorhandenen Bremspedal betätigt werden kann. Mit Hilfe des Bedienelementes 31, 31', 31", 31"', 31"", 31""' kann unkompliziert die Streckbremsfunktion aktiviert bzw. deaktiviert werden und damit zwischen einer Zuordnung der Bremspedaleinrichtung 5, 5' als Betätigungseinrichtung für die Betriebsbremse und als Betätigungseinrichtung für die Streckbremse gewechselt werden. Die Erfindung verwendet das von der Bremspedaleinrichtung 5; 5' erzeugte elektrische bzw. optische Signal zum Betätigen der Streckbremse. Die Streckbremse ist deshalb ebenso fein dosierbar wie die Betriebsbremse und erfordert keinen zu der Betriebsbremse zusätzlichen Verrohrungsaufwand einer Fahrerkabine des Zugfahrzeugs 2. Hierdurch spart die Erfindung Kosten im Vergleich zu den bekannten Bremsanlagen mit Streckbremsfunktion. Darüber hinaus erhöht die Bremsanlage die Sicherheit, da lediglich zum Umschalten auf die Streckbremsfunktion das Bedienelement 31, 31', 31", 31"', 31"", 31""' betätigt werden muss. Während eines Bremsvorgangs mit der Streckbremse braucht dagegen lediglich das Bremspedal der Bremspedaleinrichtung 5, 5' betätigt zu werden, was es einem Fahrer ermöglicht, während der Bremsung mit der Streckbremse mit zwei Händen das Lenkrad zu drehen oder bspw. gleichzeitig zu lenken und zu kuppeln.

Vorteilhaft an der Erfindung ist zudem, dass durch die nur teilweise Unterdrückung der Betriebsbremse eine Konformität mit den gesetzlichen Vorschriften in Westeuropa erreicht werden kann. Die teilweise Unterdrückung kann hierbei eine Reduktion der Bremskraft an allen Betriebsbremsen oder eine ausschließliche Reduktion an der Hinterachse sein, so dass die Hinterachse stärkere Seitenführungskräfte aufnehmen und das Fahrzeug stabilisieren kann. Ferner kann die Konformität erreicht werden, indem die Streckbremswirkung bzw. Reduzierung der Betriebsbremskraft des Zugfahrzeuges nicht direkt vom Fahrer gesteuert wird, sondern die Funktion erst bei Vorliegen definierter Fahrzustände und damit automatisch aktivierbar ist, beispielsweise bei geringen Fahrzeuggeschwindigkeit, engen Kurvenradien und nicht betätigten Fahrpedals. Damit ist sichergestellt, dass die Streckbremsfunktion bzw. Reduzierung der Betriebsbremskraft des Zugfahrzeuges zur automatisierten Fahrzeugstabilisierung dient.

## Patentansprüche

1. Elektrisch gesteuerte Bremsanlage für einen aus einem Zugfahrzeug (2) und wenigstens einem Anhängefahrzeug (3) bestehenden Fahrzeugzug (4), wobei die Bremsanlage (1; 1') eine Bremspedaleinrichtung (5; 5') aufweist, mittels der ein Bremsanforderungssignal erzeugbar ist, in dessen Erwiderung wenigstens eine erste Bremse (6, 9) an dem Zugfahrzeug (2) zum Einbremsen dieses Zugfahrzeugs (2) und wenigstens eine zweite Bremse (12) an dem Anhängefahrzeug (3) zum Einbremsen dieses Anhängefahrzeugs (3) betätigbar ist, wobei die Bremsanlage (1; 1') ferner eine auf die zweite Bremse (12) des Anhängefahrzeugs (3) wirkende Streckbremsfunktion aufweist, **dadurch gekennzeichnet, dass** die Streckbremsfunktion mittels der Bremspedaleinrichtung (5; 5') betätigbar ist und dass die Bremsanlage (1; 1') ein elektrisches Bedienelement (31; 31'; 31"; 31"'; 31""; 31""') aufweist, mittels dessen ein Streckbremssteuersignal für eine derartige Steuerung der Streckbremsfunktion erzeugbar ist, dass in dessen Erwiderung bei Betätigung der Bremspedaleinrichtung (5; 5') das Einbremsen des Zugfahrzeugs (2) mittels der ersten Bremse (6, 9) ganz oder teilweise unterdrückbar ist.

2. Bremsanlage nach Anspruch 1, **gekennzeichnet durch** eine Steuereinrichtung (16; 16'; 16") zur Steuerung eines elektronisch geregelten Bremssystems, wobei von dieser Steuereinrichtung (16; 16'; 16") das Bremsanforderungssignal und das Streckbremssteuersignal empfangbar sind und wobei mittels dieser Steuereinrichtung (16; 16'; 16") im Falle eines Empfangens des Bremsanforderungssignals und Ausbleibens des Streckbremssteuersignals die erste Bremse (6, 9) mit einer ersten Bremskraft und die zweite Bremse (12) mit einer zweiten Bremskraft jeweils nach Maßgabe des Bremsanforderungssignals betätigbar ist und im Falle des Empfangens dieses Bremsanforderungssignals und des gleichzeitigen oder vorhergehenden Empfangens dieses Streckbremssteuersignals die erste Bremse (6, 9) nicht oder mit einer verglichen mit der ersten Bremskraft verringerten Bremskraft betätigbar ist und die zweite Bremse (12) mit der zweiten Bremskraft oder mit einer verglichen mit der zweiten Bremskraft erhöhten Bremskraft betätigbar ist.

3. Bremsanlage nach Anspruch 2, **dadurch gekennzeichnet, dass** die Steuereinrichtung (16; 16'; 16") als eigenständiges elektronisches Steuergerät ausgebildet ist, insbesondere in einem eigenen Gehäuse angeordnet ist.

4. Bremsanlage nach Anspruch 2, **dadurch gekennzeichnet, dass** die Steuereinrichtung (16; 16'; 16") in die Bremspedaleinrichtung (5; 5') integriert ist.

5. Bremsanlage nach Anspruch 3 , **dadurch gekennzeichnet, dass** die Steuereinrichtung (16; 16'; 16") in ein Achsmodul (18; 18', 20; 20') integriert ist, mittels dessen, insbesondere durch Aussteuerung eines pneumatischen Drucks zum Betätigen von Bremszylindern, die erste Bremse (6, 9) und/oder die zweite Bremse (12) betätigbar ist.

6. Bremsanlage nach einem der vorhergehenden Ansprüche, **dadurch gekennzeichnet, dass** das Bedienelement (31; 31'; 31"; 31"'; 31""; 31""') in wenigstens zwei Schaltzuständen schaltbar ist, wobei die Streckbremsfunktion in einem ersten Schaltzustand ausgeschaltet und in einem zweiten Schaltzustand eingeschaltet ist.

7. Bremsanlage nach Anspruch 6, **gekennzeichnet durch** wenigstens eine Lampe (46; 46'; 46"), insbesondere an dem Bedienelement (31; 31'; 31"; 31"'; 31""; 31""'), welche zum Anzeigen des jeweiligen Schaltzustandes des Bedienelementes (31; 31'; 31"; 31"'; 31""; 31""') leuchtend oder nicht-leuchtend schaltbar ist.

8. Bremsanlage nach einem der vorhergehenden Ansprüche, **dadurch gekennzeichnet, dass** das Bedienelement (31; 31'; 31"; 31"'; 31""; 31""') manuell betätigbar, insbesondere wenigstens ein manuell betätigbarer Handschalter, Hebel, Druckknopf oder Taster ggf. mit Wippe, ist und/oder mittels eines Fußes betätigbar, insbesondere wenigstens ein Fußschalter, Fußdruckknopf, eine Fußwippe oder ein Fußtaster, ist.

9. Bremsanlage nach einem der vorhergehenden Ansprüche, **dadurch gekennzeichnet, dass** stufenlos oder mehrstufig ein Unterdrückungsgrad einstellbar ist, mit dem das Einbremsen des Zugfahrzeugs (2) unterdrückbar ist, wobei das Einbremsen des Zugfahrzeugs (2) in einer ersten Einstellung weniger als bei gleichem Bremsanforderungssignal in einer zweiten Einstellung unterdrückbar ist.

10. Bremsanlage nach Anspruch 9, **dadurch gekennzeichnet, dass** zum Einstellen des Unterdrückungsgrades ein den Unterdrückungsgrad repräsentierendes Signal erzeugbar und zusammen mit dem Streckbremssteuersignal oder in dem Streckbremssteuersignal bereitstellbar ist.

11. Bremsanlage nach einem der Ansprüche 9 oder 10, **gekennzeichnet durch** eine Einstellvorrichtung (47; 47'), insbesondere einen Drehschalter oder einen Hebel, mittels dessen der Unterdrückungsgrad manuell einstellbar ist.

12. Bremsanlage nach Anspruch 11, **dadurch gekennzeichnet, dass** die Einstellvorrichtung (47; 47') zusammen mit dem Bedienelement (31; 31'; 31"; 31"'; 31""; 31""') eine Einheit bildet, insbesondere diese Einheit eine als Drehschalter oder Hebel ausgebildete Einstellvorrichtung (47; 47') mit einem als Taster ausgebildeten Bedienelement (31; 31'; 31"; 31"'; 31""; 31""') ist.

13. Bremsanlage nach einem der Ansprüche 9 bis 12, **gekennzeichnet durch** eine automatische Einstellbarkeit des Unterdrückungsgrades in Abhängigkeit von dem Bremsanforderungssignal, von einem Lenkradeinschlag, von einem Fahrzeugzustand und/oder von einem Fahrzustand, wobei der Fahrzeugzustand und/oder Fahrzustand insbesondere die Radgeschwindigkeiten mittels wenigstens eines Sensors, insbesondere Radgeschwindigkeitssensiermittels, Beschleunigungssensors, Lenkradwinkelsensors und/oder Lastsensors, ermittelbar ist.

14. Bremsanlage nach einem der vorhergehenden Ansprüche, **dadurch gekennzeichnet, dass** die erste Bremse 6, 9 elektropneumatisch betätigbar ist, dass diese Bremsanlage eine Druckluftleitung (84, 85), insbesondere mit einem mittels der Bremspedaleinrichtung (5) aussteuerbaren Steuerdruck, und ein Absperrmagnetventil (80) in dieser Druckluftleitung (84, 85) aufweist und dass diese Druckluftleitung (84, 85) mittels dieses Absperrmagnetventils (80) zum Unterdrücken des Einbremsens absperrbar ist.

15. Bremsanlage nach einem der vorhergehenden Ansprüche, **dadurch gekennzeichnet, dass** die erste Bremse (9) an einer Hinterachse (11) des Zugfahrzeugs (2) angeordnet ist und wenigstens eine Vorderachse (8) dieses Zugfahrzeugs (2) eine dritte Bremse (6') aufweist, welche in Erwiderung auf das Bremsanforderungssignal betätigbar ist und auf welche die Streckbremsfunktion zusätzlich zu der zweiten Bremse (12) des Anhängefahrzeugs (3) wirkt.

16. Bremsanlage nach einem der vorhergehenden Ansprüche, **dadurch gekennzeichnet, dass** in Erwiderung auf ein vollständiges und/oder sehr schnelles Betätigen eines Bremspedals (96) der Bremspedaleinrichtung (5; 5') ein größtmöglicher Verzögerungswunsch ermittelt wird und in Erwiderung auf einen ermittelten größtmöglichen Verzögerungswunsch im Falle der aktivierten Streckbremsfunktion diese Streckbremsfunktion deaktivierbar ist.

17. Bremsanlage nach einem der vorhergehenden Ansprüche, **dadurch gekennzeichnet, dass** für einen weichen Übergang von der deaktivierten zu der aktivierten Streckbremsfunktion in Erwiderung auf eine Aktivierung der Streckbremsfunktion während eines Bremsvorgangs ein Unterdrückungsgrad stufenlos oder mehrstufig erhöhbar ist.

18. Bremsanlage nach einem der vorhergehenden Ansprüche, **dadurch gekennzeichnet, dass** für einen weichen Übergang von der aktivierten zu der deaktivierten Streckbremsfunktion in Erwiderung auf eine Deaktivierung der Streckbremsfunktion während eines Bremsvorgangs ein Unterdrückungsgrad stufenlos oder mehrstufig verringerbar ist.

19. Bremsanlage nach Anspruch 17 oder 18, **dadurch gekennzeichnet, dass** eine Geschwindigkeit des Erhöhens bzw. Verringerns des Unterdrückungsgrades von Fahrzuständen des Fahrzeugzugs (4), insbesondere der Geschwindigkeit dieses Fahrzeugzugs (4), und/oder einer Betätigungsgeschwindigkeit und/oder einer Betätigungskraft bei der Betätigung des Bremspedals (96) abhängig ist.

20. Bremsanlage nach einem der vorhergehenden Ansprüche, **dadurch gekennzeichnet, dass** die Streckbremsfunktion nur dann aktivierbar ist, wenn eine Koppelung des Anhängefahrzeugs (3) an das Zugfahrzeug (2) und zudem ein bestimmungsgemäß funktionierendes Antiblockiersystem an dem Anhängefahrzeug (3) ermittelt ist.

21. Bremsanlage nach einem der vorhergehenden Ansprüche, **dadurch gekennzeichnet, dass** die Streckbremsfunktion nur dann aktivierbar bzw. eine aktivierte Streckbremsfunktion nur dann aufrechterhaltbar ist, wenn ein ermittelter Fahrzustand und/oder Fahrzeugzustand des Fahrzeugzugs (4) in einem hierfür zulässigen, vordefinierten Bereich liegt, insbesondere, wenn eine ermittelte Fahrgeschwindigkeit einen Grenzwert nicht überschreitet, wenn eine Kurvenfahrt ermittelt ist und/oder wenn wenigstens eine weitere Bremse, insbesondere Motorbremse, des Zugfahrzeugs (2) aktiviert ist.

22. Bremsanlage nach einem der vorhergehenden Ansprüche, **dadurch gekennzeichnet, dass** im Falle der aktivierten Streckbremsfunktion diese Streckbremsfunktion in Abhängigkeit von wenigstens einem ermittelten Fahrzustand und/oder Fahrzeugzustand des Fahrzeugzugs (4), insbesondere einer ermittelten Fahrgeschwindigkeit, eines Motorstarts und/oder einer ermittelten Fehlfunktion des Antiblockiersystems am Anhängefahrzeug (3) und/oder ggf., insbesondere an der dritten Bremse (6'), am Zugfahrzeug (2), deaktivierbar ist.

## Claims

1. Electrically controlled brake assembly for a vehicle train (4) composed of a tractor vehicle (2) and at least one trailer vehicle (3), wherein the brake assembly (1; 1') has a brake pedal device (5; 5') by means of which a brake request signal can be generated, in reply to which at least a first brake (6, 9) on the tractor vehicle (2) for braking this tractor vehicle (2) can be activated, and at least a second brake (12) on the trailer vehicle (3) for braking this trailer vehicle (3) can be activated, wherein the brake assembly (1, 1') also has an anti-jackknife braking function which acts on the second brake (12) of the trailer vehicle (3), **characterized in that** the anti-jackknife braking function can be activated by means of the brake pedal device (5; 5'), and **in that** the brake system (1; 1') has an electric operator control element (31; 31'; 31"; 31"'; 31""; 31""') by means of which an anti-jackknife braking control signal can be generated for such a controller of the anti-jackknife braking function, **in that** in reply to which the braking of the tractor vehicle (2) by means of the first brake (6, 9) can be entirely or partially suppressed when the brake pedal device (5; 5') is activated.

2. Brake assembly according to Claim 1, **characterized by** a control device (16; 16'; 16") for controlling an electronically controlled brake system, wherein the braking request signal and the anti-jackknife braking control signal can be received by this control device (16; 16'; 16"), and wherein if the braking request signal is received and the anti-jackknife braking control signal fails to occur the first brake (6, 9) can be activated with a first braking force and the second brake (12) can be activated with a second braking force by means of this control device (16; 16'; 16"), in each case in accordance with the braking request signal, and if this braking request signal is received and this anti-jackknife braking control signal is simultaneously or previously received, the first brake (6, 9) cannot be activated or can be activated with a braking force which is reduced in comparison with the first braking force, and the second brake (12) can be activated with the second braking force or with a braking force which is increased in comparison with the second braking force.

3. Brake assembly according to Claim 2, **characterized in that** the control device (16; 16'; 16") is embodied as an independent electronic control unit, in particular is arranged in a separate housing.

4. Brake assembly according to Claim 2, **characterized in that** the control device (16; 16'; 16") is integrated into the brake pedal device (5; 5').

5. Brake assembly according to Claim 3, **characterized in that** the control device (16; 16'; 16") is integrated into an axial module (18; 18'; 20; 20') by means of which the first brake (6, 9) and/or the second brake (12) can be activated, in particular by modulating a pneumatic pressure, in order to activate brake cylinders.

6. Brake assembly according to one of the preceding claims, **characterized in that** the operator control element (31; 31'; 31"; 31"'; 31""; 31""') can be switched into at least two switched states, wherein the anti-jackknife braking function is switched off in a first switched state and switched on in a second switched state.

7. Brake assembly according to Claim 6, **characterized by** at least one lamp (46; 46'; 46"), in particular on the operator control element (31; 31'; 31"; 31"'; 31""; 31""') which can be switched to an illuminating or non-illuminating state in order to display the respective switched state of the operator control element (31; 31'; 31"; 31"'; 31""; 31""').

8. Brake assembly according to one of the preceding claims, **characterized in that** the operator control element (31; 31'; 31"; 31"'; 31""; 31""') can be activated manually, in particular is at least one manual switch, lever, pushbutton or pushbutton key which can be actuated manually and, if appropriate, has a rocker, and/or can be activated by means of a foot, in particular at least one foot-operated switch, foot-operated pushbutton, a foot-operated rocker or a foot-operated pushbutton key.

9. Brake assembly according to one of the preceding claims, **characterized in that** it is possible to set, in an infinitely variable or multi-step fashion, a degree of suppression with which the braking of the tractor vehicle (2) can be suppressed, wherein the braking of the tractor vehicle (2) can be suppressed less in a first setting than in a second setting when the braking request signal is the same.

10. Brake assembly according to Claim 9, **characterized in that**, in order to set the degree of suppression, a signal which represents the degree of suppression can be generated and made available together with the anti-jackknife braking control signal or in the anti-jackknife braking control signal.

11. Brake assembly according to one of Claims 9 and 10, **characterized by** a setting device (47; 47'), in particular a rotary switch or a lever by means of which the degree of suppression can be set manually.

12. Brake assembly according to Claim 11, **characterized in that** the setting device (47; 47') forms a unit together with the operator control element (31; 31'; 31"; 31"'; 31""; 31""'), and in particular this unit is a setting device (47; 47') which is embodied as a rotary switch or lever and has an operator control element (31; 31'; 31"; 31"'; 31""; 31""') which is embodied as a pushbutton key.

13. Brake assembly according to one of Claims 9 to 12, **characterized by** an automatic setting capability of the degree of suppression in accordance with the braking request signal, with a steering wheel lock, with a vehicle state and/or a driving state, wherein the vehicle state and/or driving state, in particular the wheel speeds, can be determined by means of at least one sensor, in particular wheel speed sensing means, acceleration sensor, steering wheel angle sensor and/or load sensor.

14. Brake assembly according to one of the preceding claims, **characterized in that** the first brake (6, 9) can be activated electropnuematically, **in that** this brake assembly has a compressed air line (84, 85), in particular with a control pressure which can be modulated by means of the brake pedal device (5), and a shut-off solenoid valve (80) in this compressed air line (84, 85), and **in that** this compressed air line (84, 85) can be shut off by means of this shut-off solenoid valve (80) in order to suppress the braking.

15. Brake assembly according to one of the preceding claims, **characterized in that** the first brake (9) is arranged on a rear axle (11) of the tractor vehicle (2), and at least one front axle (8) of this tractor vehicle (2) has a third brake (6') which can be activated in response to the braking request signal and on which the anti-jackknife braking function acts in addition to the second brake (12) of the trailer vehicle (3).

16. Brake assembly according to one of the preceding claims, **characterized in that** a maximum deceleration request is determined in response to entire and/or very rapid activation of a brake pedal (96) of the brake pedal device (5; 5') and the anti-jackknife braking function can be deactivated in response to a determined, largest possible deceleration request when this anti-jackknife braking function is activated.

17. Brake assembly according to one of the preceding claims, **characterized in that**, for a soft transition from the deactivated anti-jackknife braking function to the activated anti-jackknife braking function a degree of suppression can be increased in an infinitely variable or multi-step fashion in response to activation of the anti-jackknife braking function during a braking operation.

18. Brake assembly according to one of the preceding claims, **characterized in that**, for a soft transition from the activated anti-jackknife braking function to the deactivated anti-jackknife braking function a degree of suppression can be reduced in an infinitely variable or multi-step fashion in response to deactivation of the anti-jackknife braking function during the braking operation.

19. Brake assembly according to Claim 17 or 18, **characterized in that** a speed of increasing or reducing the degree of suppression is dependent on driving states of the vehicle train (4), in particular on the speed of this vehicle train (4) and/or on an activation speed and/or on an activation force during the activation of the brake pedal (96).

20. Brake assembly according to one of the preceding claims, **characterized in that** the anti-jackknife braking function can be activated only if coupling of the trailer vehicle (3) of the tractor vehicle (2) and additionally an anti-lock brake system which functions correctly on the trailer vehicle (3) is determined.

21. Brake assembly according to one of the preceding claims, **characterized in that** the anti-jackknife braking function can be activated and/or an activated anti-jackknife braking function can be maintained only if a determined driving state and/or vehicle state of the vehicle train (4) is in a predefined range which is permissible for this, in particular if a determined velocity does not exceed a limiting value, if cornering is determined and/or if at least one further brake, in particular engine brake, of the tractor vehicle (2) is activated.

22. Brake assembly according to one of the preceding claims, **characterized in that** when the anti-jackknife braking function is activated, this anti-jackknife braking function can be deactivated as a function of at least one determined driving state and/or vehicle state of the vehicle train (4), in particular of a determined velocity, of an engine start and/or a determined malfunction of the anti-lock brake system on the trailer vehicle (3) and/or, under certain circumstances, in particular on the third brake (6'), on the tractor vehicle (2).

## Revendications

1. Système de freinage à commande électrique destiné à un train de véhicules (4) comprenant un véhicule tracteur (2) et au moins une remorque (3), le système de freinage (1, 1') comportant un dispositif de pédale de frein (5, 5') au moyen duquel un signal de demande de freinage peut être généré en réponse duquel au moins un premier frein (6, 9) au niveau du véhicule tracteur (2) peut être actionné pour freiner ce véhicule tracteur (2) et au moins un deuxième frein (12) au niveau de la remorque (3) peut être actionné pour freiner cette remorque (3), le système de freinage (1 ; 1') ayant en outre une fonction de freinage de maintien en ligne agissant sur le deuxième frein (12) de la remorque (3), **caractérisé en ce que** la fonction de freinage de maintien en ligne peut être actionnée au moyen du dispositif de pédale de frein (5 ; 5') et **en ce que** le système de freinage (1 ; 1') comporte un élément de commande électrique (31 ; 31' ; 31" ; 31"' ; 31"" ; 31""') au moyen duquel un signal de commande de freinage de maintien en ligne peut être généré pour une telle commande de la fonction de freinage de maintien en ligne, **en ce que** le freinage du véhicule tracteur (2) peut être totalement ou partiellement supprimé au moyen du premier frein (6, 9) lors de l'actionnement du dispositif de pédale de frein (5 ; 5') en réponse à ce signal.

2. Système de freinage selon la revendication 1, **caractérisé par** un dispositif de commande (16 ; 16' ; 16") destiné à commander un système de freinage à commande électronique, le signal de demande de freinage et le signal de commande de freinage de maintien en ligne peuvent être reçus par ce dispositif de commande (16 ; 16' ; 16") et, en cas de réception du signal de demande de freinage et d'absence du signal de commande de freinage de maintien en ligne, le premier frein (6, 9) pouvant être actionné avec une première force de freinage et le deuxième frein (12) pouvant être actionné avec une deuxième force de freinage à chaque fois conformément au signal de demande de freinage au moyen du dispositif de commande (16 ; 16' ; 16") et, en cas de réception de ce signal de demande de freinage et de réception simultanée ou antérieure de ce signal de commande de freinage de maintien en ligne, le premier frein (6, 9) ne pouvant pas être actionné ou pouvant être actionné avec une force de freinage réduite par rapport à la première force de freinage et le deuxième frein (12) pouvant être actionné avec la deuxième force de freinage ou avec une force de freinage accrue par rapport à la deuxième force de freinage.

3. Système de freinage selon la revendication 2, **caractérisé en ce que** le dispositif de commande (16 ; 16' ; 16") est conçu comme une unité de commande électronique indépendante qui est en particulier disposée dans un boîtier séparé.

4. Système de freinage selon la revendication 2, **caractérisé en ce que** le dispositif de commande (16 ; 16' ; 16") est intégré dans le dispositif de pédale de frein (5, 5').

5. Système de freinage selon la revendication 3, **caractérisé en ce que** le dispositif de commande (16 ; 16' ; 16") est intégré dans un module d'essieu (18 ; 18', 20 ; 20') au moyen duquel le premier frein (6, 9) et/ou le deuxième frein (12) peut être actionné en particulier par commande d'une pression pneumatique pour actionner des cylindres de frein.

6. Système de freinage selon l'une des revendications précédentes, **caractérisé en ce que** l'élément de commande (31 ; 31' ; 31" ; 31"' ; 31"" ; 31""') peut être commuté dans au moins deux états de commutation, la fonction de freinage de maintien en ligne étant désactivée dans un premier état de commutation et activée dans un deuxième état de commutation.

7. Système de freinage selon la revendication 6, **caractérisé par** au moins une lampe (46 ; 46' ; 46"), en particulier au niveau de l'élément de commande (31 ; 31' ; 31" ; 31"' ; 31"" ; 31""'), laquelle peut être commutée pour être lumineuse ou non lumineuse pour afficher l'état de commutation respectif de l'élément d'actionnement (31 ; 31' ; 31" ; 31"' ; 31"" ; 31""').

8. Système de freinage selon l'une des revendications précédentes, **caractérisé en ce que** l'élément de commande (31 ; 31' ; 31" ; 31"' ; 31"" ; 31""') peut être actionné manuellement, en particulier c'est au moins un commutateur manuel, un levier, un bouton de pression ou un bouton poussoir éventuellement à bascule, et/ou peut être actionné à l'aide d'un pied, en particulier c'est au moins un commutateur au pied, un bouton de pression au pied, une pédale ou un bouton poussoir au pied.

9. Système de freinage selon l'une des revendications précédentes, **caractérisé en ce qu'**un degré de suppression est réglable en continu ou en plusieurs étapes, qui permet de supprimer le freinage du véhicule tracteur (2), le freinage du véhicule tracteur (2) étant moins susceptible d'être supprimé dans un premier réglage que pour le même signal de demande de freinage dans un deuxième réglage.

10. Système de freinage selon la revendication 9, **caractérisé en ce que**, pour régler le degré de suppression, un signal représentant le degré de suppression peut être généré et délivré conjointement avec le signal de commande de freinage de maintien en ligne ou dans le signal de commande de freinage de maintien en ligne.

11. Système de freinage selon l'une des revendications 9 ou 10, **caractérisé par** un dispositif de réglage (47 ; 47'), notamment un commutateur rotatif ou un levier au moyen duquel le degré de suppression est réglable manuellement.

12. Système de freinage selon la revendication 11, **caractérisé en ce que** le dispositif de réglage (47 ; 47') forme une unité conjointement avec l'élément de commande (31 ; 31' ; 31" ; 31"' ; 31"" ; 31""'), en particulier cette unité est un dispositif de réglage (47 ; 47') conçu comme un commutateur rotatif ou un levier et comprenant un élément de commande (31 ; 31' ; 31" ; 31"' ; 31"" ; 31""') conçu comme un bouton-poussoir.

13. Système de freinage selon l'une des revendications 9 à 12, **caractérisé par** un réglage automatique du degré de suppression en fonction du signal de demande de freinage, d'un braquage du volant, d'un état du véhicule et/ou d'un état de roulement, l'état du véhicule et/ou l'état de conduite, en particulier les vitesses de roue, pouvant être déterminés au moyen d'au moins un capteur, en particulier d'un moyen de détection de vitesse de roue, d'un capteur d'accélération, d'un capteur d'angle de volant et/ou d'un capteur de charge.

14. Système de freinage selon l'une des revendications précédentes, **caractérisé en ce que** le premier frein (6, 9) peut être actionné par des moyens électropneumatiques, **en ce que** ce système de freinage comporte une conduite d'air comprimé (84, 85), notamment à une pression de commande commandable à l'aide du dispositif de pédale de frein (5), et une valve d'obturation magnétique (80) placée dans cette conduite d'air comprimé (84, 85) et **en ce que** cette conduite d'air comprimé (84, 85) peut être fermée à l'aide de cette valve d'obturation magnétique (80) pour supprimer le freinage.

15. Système de freinage selon l'une des revendications précédentes, **caractérisé en ce que** le premier frein (9) est disposé au niveau d'un essieu arrière (11) du véhicule tracteur (2) et au moins un essieu avant (8) de ce véhicule tracteur (2) comporte un troisième frein (6') qui peut être actionné en réponse au signal de demande de freinage et sur lequel la fonction de freinage de maintien en ligne agit en plus du deuxième frein (12) de la remorque (3).

16. Système de freinage selon l'une des revendications précédentes, **caractérisé en ce qu'**une demande de retard maximum est déterminée en réponse à un actionnement complet et/ou très rapide d'une pédale de frein (96) du dispositif de pédale de frein (5 ; 5') et, en réponse à une demande de retard maximum déterminée dans le cas de la fonction de freinage de maintien en ligne activée, cette fonction de freinage de maintien en ligne peut être désactivée.

17. Système de freinage selon l'une des revendications précédentes, **caractérisé en ce que**, pour une transition en douceur de la fonction de freinage de maintien en ligne désactivée à la fonction de freinage de maintien en ligne activée, en réponse à une activation de la fonction de freinage de maintien en ligne pendant une opération de freinage, un degré de suppression peut être augmenté en continu ou plusieurs étapes.

18. Système de freinage selon l'une des revendications précédentes, **caractérisé en ce que**, pour une transition en douceur de la fonction de freinage de maintien en ligne activée à la fonction de freinage de maintien en ligne désactivée, en réponse à une désactivation de la fonction de freinage de maintien en ligne pendant une opération de freinage, un degré de suppression peut être réduit en continu ou en plusieurs étapes.

19. Système de freinage selon la revendication 17 ou 18, **caractérisé en ce qu'**une vitesse d'augmentation ou de diminution du degré de suppression dépend d'états de roulement du train de véhicules (4), en particulier de la vitesse de ce train de véhicules (4), et/ou d'une vitesse d'actionnement et/ou d'une force d'actionnement lors de l'actionnement de la pédale de frein (96).

20. Système de freinage selon l'une des revendications précédentes, **caractérisé en ce que** la fonction de freinage de maintien en ligne ne peut être activée que lorsqu'un accouplement de la remorque (3) au véhicule tracteur (2) et qu'un système antiblocage fonctionnant correctement au niveau de la remorque (3) sont déterminés.

21. Système de freinage selon l'une des revendications précédentes, **caractérisé en ce que** la fonction de freinage de maintien en ligne ne peut être activée, ou une fonction de freinage de maintien en ligne activée ne peut être maintenue, que lorsque l'état de roulement et/ou l'état du véhicule du train de véhicules (4) se trouvent dans une plage prédéfinie admissible, en particulier lorsqu'une vitesse de roulement déterminée ne dépasse pas une valeur limite, lorsqu'un virage est déterminé et/ou lorsqu'au moins un frein supplémentaire, notamment un frein moteur, du véhicule tracteur (2) est activé.

22. Système de freinage selon l'une des revendications précédentes, **caractérisé en ce que**, dans le cas de la fonction de freinage de maintien en ligne activée, cette fonction de freinage de maintien en ligne peut être désactivée en fonction d'au moins un état de roulement et/ou d'un état de véhicule déterminé du train de véhicules (4), en particulier d'une vitesse de roulement déterminée, d'un démarrage du moteur et/ou d'un dysfonctionnement déterminé du système antiblocage au niveau de la remorque (3) et/ou éventuellement, en particulier au niveau du troisième frein (6'), au niveau du véhicule tracteur (2).
